# FASCICULE DE BREVET EUROPEEN

(11) **EP 3 206 805 B1**
(45) Date de publication et mention de la délivrance du brevet: **02.01.2019**
(21) Numéro de dépôt: 15788160.8
(22) Date de dépôt: 09.10.2015
(51) Int. Cl.: G06K 19/06, G06K 7/10, B07C 5/342

(54) **PROCÉDÉ, DISPOSITIF ET LIGNE D'INSPECTION POUR LA LECTURE OPTIQUE DE RELIEFS SUR UNE PAROI LATÉRALE D'UN RÉCIPIENT**
VERFAHREN, VORRICHTUNG UND INSPEKTIONSLINIE ZUR OPTISCHEN AUSLESUNG RELIEF AN EINER SEITENWAND EINES BEHÄLTERS
METHOD, DEVICE AND INSPECTION LINE FOR OPTICAL READING RELIEF ON A SIDE WALL OF A CONTAINER

(30) Priorité: 17.10.2014 FR 1460030
(43) Date de publication de la demande: 23.08.2017
(73) Titulaire: Tiama, 69390 Vourles (FR)
(72) Inventeur: FAYOLLE, Lubin, F-69530 Brignais (FR)
(74) Mandataire: Putet, Gilles
(86) Numéro de dépôt international: PCT/FR2015/052718
(87) Numéro de publication internationale: WO 2016/059326

(56) Documents cités:
- EP-A1- 1 494 010
- EP-A1- 1 952 898
- WO-A1-00/00924
- DE-U1- 29 920 232
- FR-A1- 2 986 326

## Description

L'invention concerne un procédé et un dispositif de lecture optique de reliefs formant un code d'identification sur un récipient.

Une des applications de l'invention vise à assurer la lecture d'un numéro de moule inscrit sur une portion de la paroi latérale externe d'un récipient, par exemple sur le jable d'une bouteille, notamment une bouteille en verre. Ce numéro est dans certains cas inscrit sous la forme d'un code formé de reliefs, par exemple des perles, formés sur le jable, à savoir l'extrémité inférieure de la paroi latérale du récipient. Dans ce contexte, il importe de repérer la position de ces reliefs, notamment la position angulaire, pour pouvoir en déduire le code et donc le numéro de moule.

Dans le domaine d'application préféré de l'invention, il est connu de lire un numéro du moule porté par les récipients, afin d'assurer par exemple l'association d'éventuels défauts, qui peuvent être détectés par des capteurs dédiés, au numéro du moule défectueux. On peut ainsi assurer le rejet automatique des récipients fabriqués par un moule défectueux. La lecture d'un code d'identification peut par ailleurs permettre le prélèvement automatique des récipients issus d'un ou de plusieurs moules, pour échantillonnage notamment. L'objet de l'invention trouve aussi une autre application avantageuse dans le domaine du tri des récipients vides ou pleins par numéro de moule. Différents dispositifs ont déjà été proposés dans l'art antérieur. Certains de ces dispositifs nécessitaient de faire pivoter le récipient autour de son axe central devant un dispositif de lecture et s'avéraient donc complexes, tout en ralentissant les opérations de convoyage.

Le document EP-1.010.126 décrit un procédé de lecture optique de reliefs formant un code d'identification. Dans le procédé décrit dans ce document, il est prévu d'éclairer une portion d'intérêt de la paroi latérale externe du récipient, cette portion étant limitée selon la direction d'un axe d'installation mais s'étendant à 360° autour de cet axe d'installation. Selon un exemple, le jable d'une bouteille en verre est ainsi éclairé. L'éclairage s'effectue à l'aide d'une source lumineuse qui fournit un faisceau lumineux incident périphérique comprenant des rayons lumineux radiaux contenus dans un plan radial contenant l'axe d'installation. Les rayons radiaux sont dirigés vers l'axe d'installation et le faisceau ainsi généré comporte, dans un même plan radial, des rayons radiaux non parallèles. Le procédé décrit dans ce document prévoit de former, par l'intermédiaire d'un élément optique, ici un miroir tronconique concave s'évasant vers le bas à l'opposé d'une zone d'installation dans laquelle on vient placer le récipient à observer, une image plane de la portion d'intérêt de la paroi du récipient. Cette image plane est formée, au travers d'un système optique, dans le champ de vision d'un capteur photoélectrique matriciel. Le procédé comprend ensuite l'étape consistant à assurer le traitement de l'image reçue par le capteur, afin de détecter les reliefs pour pouvoir décoder le code d'identification.

Pour la mise en oeuvre de ce procédé, le document EP-1.010.126 décrit un dispositif qui est entièrement compris en dessous de la zone d'installation du récipient et qui comporte un système d'éclairage fournissant, par exemple au moyen d'une fibre optique annulaire, un cône lumineux incident permettant d'éclairer toute la périphérie du jable du récipient. Le dispositif comporte une caméra matricielle, c'est-à-dire capable de récupérer des images bidimensionnelles, destinée à recevoir l'image de la portion d'intérêt de la surface latérale externe du récipient. Un système optique est interposé entre la zone d'installation et le capteur pour former sur le capteur une image de la portion d'intérêt de la paroi latérale externe du récipient. Le système optique comporte un élément optique constitué d'un miroir optique tronconique de révolution. Le système optique comporte aussi un objectif standard incorporé à la caméra matricielle et un miroir de renvoi agencé à 45° par rapport à un axe d'installation correspondant à la fois à l'axe central de la source de lumière incidente et à l'axe central de l'élément optique. La caméra peut ainsi être placée à 90° par rapport à l'axe d'installation afin de diminuer l'encombrement du dispositif selon la direction de cet axe. En quelque sorte, le système optique, pris dans sa globalité entre le capteur et la zone d'installation prévue pour recevoir un récipient à observer, présente un axe optique comportant 2 parties principales orthogonales : l'une côté caméra et l'autre côté zone d'installation. L'avantage du dispositif décrit dans ce document réside dans le fait que le système d'éclairage, le capteur et le système optique sont agencés en dessous de la zone d'installation destinée à accueillir un récipient à observer, cette zone d'installation étant la zone d'observation du dispositif. De la sorte, il est possible de déplacer le récipient perpendiculairement à son axe central pour l'amener dans la zone d'installation. Un tel dispositif trouve donc facilement sa place en dessous d'une ligne de convoyage de bouteilles ou de récipients, sans interférer avec le déplacement des récipients, sachant qu'en règle générale, les systèmes de convoyages de récipients assurent un déplacement des récipients selon une trajectoire de déplacement perpendiculaire à la direction de leur axe central.

Le dispositif décrit dans le document EP-1.010.126 est donc particulièrement adapté à la lecture de reliefs portés sur la paroi latérale d'un récipient sans nécessiter aucun élément du dispositif à la hauteur de la portion d'intérêt de la paroi latérale sur laquelle on veut lire de tels reliefs. Par ailleurs, par son système d'éclairage et de vision périphérique, qui permet d'observer à 360° autour de l'axe du récipient, ce dispositif et ce procédé ne nécessitent pas la mise en rotation du récipient ni du dispositif de lecture.

On comprend que le dispositif et le procédé décrits dans le document EP-1.010.126 exploitent le fait que le faisceau lumineux incident est au moins en partie réfléchi par réflexion spéculaire sur la portion d'intérêt de la paroi latérale externe du récipient et sur les reliefs.

Ce dispositif est parfaitement satisfaisant dans la plupart des cas d'application. Cependant, il est apparu que ce dispositif et ce procédé devaient, dans certains cas, être modifiés pour assurer la lecture des reliefs dans certaines conditions. En effet, en fonction de la géométrie de la paroi latérale externe, et en fonction de la géométrie des reliefs portés par cette surface, il existe des cas dans lesquels les rayons réfléchis par les reliefs ne peuvent être distingués, par le système optique et le capteur, des rayons réfléchis par le reste du jable. Un tel dispositif permet éventuellement de régler l'angle d'observation à chaque changement d'article en fabrication, mais il faut pour cela changer l'élément optique et donc disposer d'une gamme étendue de miroirs coniques d'observation, présentant des caractéristiques géométriques différentes. Or, ces miroirs sont coûteux et le changement de miroirs est une opération manuelle qui augmente inutilement le temps de réglage, ce qui n'est pas satisfaisant du point de vue de l'exploitation. De plus, un tel réglage par changement de miroirs ne permet pas à l'opérateur de constater en temps réel l'effet du changement par un contrôle du résultat du changement produit dans l'image. Dans certains cas, l'opérateur perd du temps à choisir le miroir conique optimum dans la gamme. Enfin, le réglage par une gamme de pièces ne permet qu'un nombre limité de configurations.

Les documents WO-00/00924, FR-2.986.326 et DE-299.20.232-U1 décrivent des procédés et dispositifs selon l'art antérieur.

L'invention vise donc à proposer un nouveau procédé et un nouveau dispositif qui puissent être facilement adaptés à des géométries de récipients et de reliefs différents pour assurer la lecture de reliefs avec un bon niveau de performance

Dans ce but, à l'invention propose un procédé de lecture optique de reliefs formant un code d'identification, les reliefs étant portés par une paroi latérale externe d'un récipient ayant un axe central théorique, comportant les étapes consistant:
- à éclairer une portion d'intérêt de la paroi latérale externe du récipient, limitée selon la direction d'un axe d'installation mais s'étendant à 360° autour de l'axe central théorique, à l'aide d'une source lumineuse fournissant un faisceau lumineux incident périphérique comprenant des rayons lumineux radiaux contenus dans un plan radial contenant l'axe central théorique, lesdits rayons radiaux étant dirigés vers l'axe central théorique, et le faisceau comportant, dans un même plan radial, des rayons radiaux non parallèles,
- à former, par l'intermédiaire d'au moins un élément optique, une image plane de la portion d'intérêt de la paroi du récipient, dans le champ de vision d'un capteur photoélectrique bidimensionnel,
- à assurer le traitement de l'image reçue par le capteur, afin de détecter les reliefs,
- le procédé étant du type dans lequel le faisceau lumineux incident est au moins en partie réfléchi par réflexion spéculaire sur la portion d'intérêt de la paroi latérale externe et sur les reliefs ;
caractérisé en ce qu'il comporte en outre l'étape consistant à déplacer, par translation selon la direction de l'axe central théorique, la source lumineuse fournissant le faisceau lumineux incident périphérique par rapport à l'élément optique, pour modifier le contraste de l'image reçue par le capteur entre des zones de l'image correspondant aux reliefs et des zones adjacentes de l'image correspondant à des zones de la portion d'intérêt de la paroi du récipient adjacentes aux reliefs.

Selon d'autres caractéristiques optionnelles d'un tel procédé :
- il comporte une étape d'optimisation du déplacement de la source consistant à rechercher au moins une position de la source selon la direction de l'axe central théorique par rapport à l'élément optique pour laquelle un niveau de contraste entre les zones de l'image correspondant aux reliefs et des zones adjacentes de l'image correspondant à des zones de la portion d'intérêt de la paroi du récipient adjacentes aux reliefs, est supérieur à un niveau prédéterminé.
- il comporte une étape de déplacement de l'élément optique selon la direction de l'axe d'installation pour amener la portion d'intérêt de la paroi du récipient dans le champ de vision du capteur, et en ce que l'étape consistant à déplacer la source lumineuse principale par rapport à l'élément optique est mise en oeuvre après l'étape de déplacement de l'élément optique.
- dans un plan radial contenant l'axe central théorique, la source lumineuse est vue d'un point de la portion d'intérêt de la paroi latérale du récipient selon un angle de vision inférieur à 15 degrés, de préférence inférieur à 5 degrés.
- l'étape d'optimisation du déplacement de la source est automatisée.

L'invention concerne encore un dispositif de lecture optique de reliefs portés par une portion d'intérêt d'une paroi latérale externe d'un récipient, du type dans lequel le dispositif présente une zone d'installation d'un récipient ayant un axe d'installation, et du type comprenant :
- un capteur photoélectrique bidimensionnel ;
- un système optique interposé entre la zone d'installation du récipient et le capteur pour former sur le capteur une image de la portion d'intérêt de paroi latérale externe d'un récipient placé dans la zone d'installation, le système optique comportant au moins un élément optique ayant une surface de réflexion de révolution autour de l'axe d'installation et présentant un diamètre minimal supérieur à un diamètre maximal de la portion d'intérêt de la paroi latérale externe d'un récipient susceptible d'être reçu dans la zone d'installation;
- un axe optique défini par le système optique qui se prolonge dans la zone d'installation pour définir l'axe d'installation ;
- un système d'éclairage comportant au moins une source lumineuse principale, périphérique et axée sur l'axe d'installation, et apte à fournir, dans la zone d'installation, un faisceau lumineux incident périphérique comprenant des rayons radiaux contenus dans un plan radial contenant l'axe d'installation, lesdits rayons radiaux étant dirigés vers l'axe d'installation, et le faisceau comprenant, dans un même plan radial, des rayons radiaux non parallèles ;
et du type dans lequel le système d'éclairage, le capteur et le système optique sont agencés en dessous de la zone d'installation,
caractérisé en ce que la source lumineuse principale fournissant le faisceau lumineux incident périphérique est mobile en translation selon la direction de l'axe d'installation, par rapport à l'élément optique.

Selon d'autres caractéristiques optionnelles d'un tel dispositif :
- la source lumineuse principale est mobile entre une multitude de positions bloquées distinctes selon la direction de l'axe d'installation, les positions bloquées étant comprises entre deux positions extrêmes.
- La source lumineuse principale est mobile entre une multitude de positions bloquées discrètes prédéfinies par rapport à l'élément optique.
- Il comporte au moins deux positions de la source lumineuse principale par rapport à l'élément optique, préférentiellement au moins trois positions bloquées.
- La source lumineuse principale peut être bloquée dans une position quelconque par rapport à l'élément optique, entre deux positions extrêmes.
- Il comporte des moyens de commande du déplacement de la source lumineuse principale en translation selon la direction de l'axe d'installation, par rapport à l'élément optique.
- Il comporte des moyens de blocage de la source lumineuse principale dans ses positions bloquées par rapport à l'élément optique.
- L'élément optique est mobile par rapport au capteur photoélectrique, selon la direction de l'axe d'installation, pour amener la portion d'intérêt de la paroi du récipient dans le champ de vision du capteur photoélectrique au travers du système optique.
- Il comporte des moyens de déplacement de l'élément optique par rapport à une embase du dispositif, et en ce que les moyens de déplacement de la source lumineuse principale par rapport à l'élément optique opèrent indépendamment des moyens de déplacement de l'élément optique par rapport à l'embase.
- Les moyens de déplacement de l'élément optique provoquent le déplacement simultané de la source lumineuse principale avec l'élément optique par rapport à l'embase.
- L'élément optique est solidaire d'une platine primaire qui est mobile par rapport à l'embase selon la direction de l'axe d'installation, en en ce que la source lumineuse principale est solidaire d'une platine secondaire qui est mobile par rapport à la platine primaire selon la direction de l'axe d'installation, et en ce qu'un déplacement de la platine primaire entraîne un déplacement égal de la platine secondaire.
- La source lumineuse principale est mobile entre au moins deux positions extrêmes selon la direction de l'axe d'installation qui sont chacune de part et d'autre de la position axiale de la surface de réflexion de l'élément optique.
- Le système d'éclairage comporte une source lumineuse auxiliaire, annulaire et axée sur l'axe d'installation, apte à fournir un faisceaux lumineux incident périphérique auxiliaire, distinct du faisceau principal fourni par la source lumineuse principale, le faisceau auxiliaire comprenant des rayons radiaux contenus dans un plan radial contenant l'axe, lesdits rayons radiaux étant dirigés vers l'axe d'installation, et le faisceau auxiliaire comprenant, dans un même plan radial, des rayons radiaux non parallèles, en ce que les deux sources lumineuses principale et auxiliaire sont décalées selon la direction de l'axe d'installation, et en ce que la source auxiliaire est en position fixe par rapport à l'élément optique.
- La source lumineuse principale est mobile entre au moins deux positions extrêmes selon la direction de l'axe d'installation qui sont toutes les deux d'un même côté de la position axiale de la surface de réflexion , et en ce que la source lumineuse auxiliaire est agencée de l'autre côté de la position axiale de la surface de réflexion.
- La surface de réflexion est une surface de révolution autour de l'axe d'installation, tournée vers l'axe d'installation, et en ce que la surface de réflexion est évasée selon la direction de l'axe d'installation et présente un grand diamètre et un petit diamètre tous les deux supérieurs au diamètre maximal de la portion d'intérêt de la paroi latérale du récipient, le grand diamètre étant agencé en dessous du petit diamètre.
- La surface de réflexion est une surface tronconique, tournée vers l'axe d'installation.
- Le capteur est agencé en dessous de la surface de réflexion.
- Le système optique comporte un système objectif optique associé au capteur.
- Le récipient est destiné à être reçu dans la zone d'installation de telle sorte que son axe central théorique soit sensiblement confondu avec l'axe d'installation.
- Le dispositif comporte une embase, et en ce que le capteur photoélectrique et l'élément optique sont fixes l'un par rapport à l'autre et mobiles par rapport à l'embase.

L'invention concerne de plus une ligne d'inspection de récipients présentant des reliefs portés par une portion inférieure d'une paroi latérale externe, du type dans laquelle des récipients sont déplacés sur une ligne de convoyage par un convoyeur qui transporte les récipients selon une direction de déplacement horizontale perpendiculaire à un axe central théorique des récipients qui présentent ainsi leur portion inférieure d'une paroi latérale externe vers le bas, caractérisée en ce que la ligne comporte un dispositif ayant selon l'une quelconque des caractéristiques précédentes, qui est agencé sur la ligne avec son axe d'installation en position verticale, de telle sorte que le faisceau lumineux incident est orienté vers le haut, vers la zone d'installation qui se situe entre le dispositif et un organe de transport du convoyeur.

Dans une telle ligne d'inspection, le convoyeur amène les récipients de manière à ce que leur axe central théorique coïncide avec l'axe d'installation, et, au moment de cette coïncidence, une image est acquise grâce au dispositif, sans contact du dispositif avec le récipient.

Diverses autres caractéristiques ressortent de la description faite ci-dessous en référence aux dessins annexés qui montrent, à titre d'exemples non limitatifs, des formes de réalisation de l'objet de l'invention.
La **figure 1** illustre le schéma de principe d'un exemple de réalisation d'un dispositif et d'un procédé selon l'invention. Sur cette figure, on a illustré le champ de vision du capteur au travers du système optique selon l'invention permettant de voir la portion d'intérêt de la surface latérale du récipient.
La **figure 2** est une vue similaire à celle de la **figure 1** et illustre en plus particulièrement le trajet d'un rayon lumineux émis par le système d'éclairage et réfléchi successivement sur un relief de la bouteille et par le système optique en direction du capteur.
La **figure 3** illustre de manière schématique mais avec plus de détails le trajet de différents rayons lumineux dans le dispositif de la **figure 2****.**
La **figure 4** est une vue similaire à celle de la **figure 2** illustrant le système d'éclairage dans d'une seconde position, adaptée à la lecture de reliefs sur le jable d'une bouteille ayant une géométrie différente.
La **figure 5** est une vue similaire à celle de la **figure 3****,** illustrant la situation de la **figure 4****.**
La **figure 6** est une vue en perspective illustrant un mode de réalisation d'un dispositif selon l'invention.
La **figure 7** est une vue schématique illustrant en vue de côté, le dispositif de la **figure 6** montrant notamment les moyens de déplacements de l'élément optique par rapport à la zone d'installation et les moyens de déplacement de la source lumineuse par rapport à l'élément optique.
La **figure 8** est une vue latérale en coupe illustrant le système de la **figure 6** illustrant plus particulièrement le champ de vision du capteur au travers du système optique selon l'invention.
Les **figures 9** et **10** sont des schémas en vue frontale illustrant deux positions de l'élément optique du dispositif.
Les **figures 11** et **12** sont des schémas en vue latérale illustrant deux positions de la source lumineuse par rapport à l'élément optique.
La **figure 13** illustre, à titre d'exemple, une image I susceptible d'être formée sur le capteur d'un dispositif selon l'invention ou l'aide d'un procédé selon l'invention.

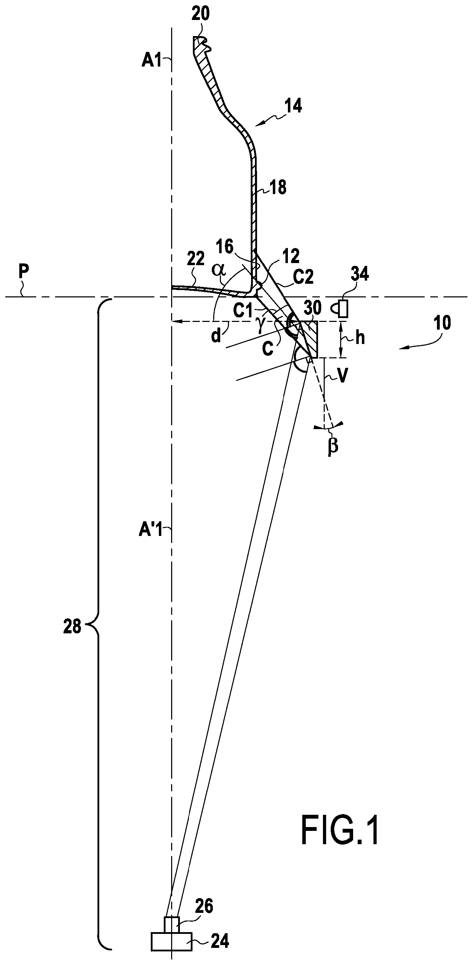

Les **Figures 1****,** **2** et **4** illustrent le schéma de principe d'un exemple de réalisation d'un dispositif **10** de lecture optique de reliefs **12** portés par une portion d'intérêt **16** d'une paroi latérale **18** externe d'un récipient **14,** ce dispositif selon l'invention permettant la mise en oeuvre d'un procédé selon l'invention.

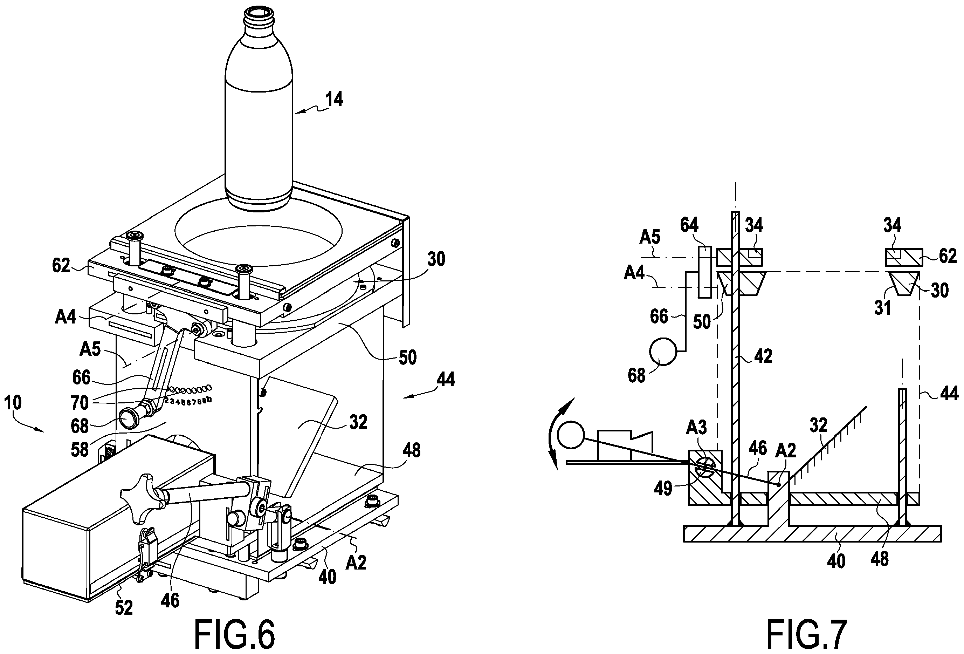

Les **Figures 6** à **8** illustrent de manière plus détaillée un mode de réalisation d'un dispositif selon l'invention et permettent la mise en oeuvre d'un procédé selon l'invention. Ce mode de réalisation met en oeuvre le schéma principe des **figures 1****,** **2** et **4****,** avec seulement la modification que le système optique comprend un miroir de renvoi entre l'élément optique et le capteur qui segmente l'axe optique du système optique en deux segments orthogonaux, permettant de disposer le capteur latéralement à l'axe d'installation. À cette différence près, la description qui suit vaut pour le schéma principe et le mode de réalisation illustré.

Un récipient **14** est défini comme un contenant creux définissant un volume intérieur qui est fermé sur toute sa périphérie volumique sauf au niveau d'une bague supérieure **20** ouverte à une extrémité.

Par commodité, et uniquement à titre de définition arbitraire, il sera en effet considéré que le récipient comporte un axe central théorique **A1,** défini comme étant l'axe central théorique de la portion d'intérêt **16** de la paroi latérale **18.** Cet axe central théorique **A1** est généralement un axe de symétrie du récipient **14.** Il sera aussi considéré arbitrairement que la bague est agencée à l'extrémité supérieure du récipient. Ainsi, dans le présent texte, les notions de haut, bas, supérieur et inférieur ont une valeur relative correspondant à l'orientation du dispositif **10** et du récipient **14** tels que représentés sur les figures. Toutefois, on comprend que l'invention pourrait être mise en oeuvre avec une orientation absolue indifférente dans l'espace, dans la mesure où les différents composants restent agencés avec le même agencement relatif.

La bague **20** du récipient est cylindrique de révolution autour de l'axe central théorique **A1.** Le corps du récipient est délimité par la paroi latérale **18** et, à son extrémité inférieure, par une paroi de fond **22** qui est relié par son bord radial externe à la paroi latérale **18** par une zone de la paroi latérale **18** communément appelée jable **16,** qui, dans l'exemple de réalisation, sera la portion d'intérêt de la paroi latérale **18.** Le corps du récipient **14** peut être aussi un volume de révolution, ou non. Dans l'exemple considéré, la paroi latérale **18** et la portion d'intérêt **16** sont des parois de révolution autour de l'axe **A1,** et la paroi de fond **22** est de forme générale sensiblement perpendiculaire à l'axe **A1.** Dans l'exemple illustré, la paroi de fond **22,** tout en étant ici légèrement bombée avec une concavité tournée vers le bas. Plus précisément, dans l'exemple illustré, la paroi latérale **18** est, sur une bonne partie de sa longueur selon la direction de l'axe **A1,** cylindrique de révolution. La bague **20** est reliée par son extrémité inférieure au reste du corps du récipient, dans le cas présent à la paroi latérale **18,** par une zone appelée épaule de cette paroi latérale **18.**

Pour que le récipient soit inspecté correctement, il conviendra de veiller à ce que le récipient soit présenté de manière adéquate devant le dispositif de détection **10.** Pour cela, le dispositif **10** selon invention comporte une zone d'installation dans laquelle le récipient devra être installé. Cette zone d'installation peut être définie par un axe d'installation **A'1** et un plan d'installation P défini comme étant un plan perpendiculaire à l'axe d'installation **A'1** et qui pourra être un plan coïncidant avec l'extrémité inférieure du récipient (appelé généralement plan de pose du récipient). Dans ce cas, un récipient se déplaçant selon une direction perpendiculaire à son axe **A1** parcourra tangentiellement, par son extrémité inférieure, le plan **P** d'installation. Ainsi, pour être inspecté correctement, un récipient devra être présenté de tel sorte que son axe central théorique **A1** corresponde au mieux à l'axe d'installation **A'1,** et que sa paroi de fond soit présentée au-dessus ou au niveau du plan d'installation **P,** tournée vers le dispositif **10,** et avec son extrémité supérieure ouverte tournée à l'opposé du dispositif **10.** Dans un cas idéal, les deux axes **A1** et **A'1** sont confondus. On comprend que l'intégralité du dispositif **10** selon l'invention peut être positionné en-dessous du plan d'installation tandis que le récipient sera amené au-dessus du plan d'installation, sans risque de contact avec le dispositif. Le récipient **14** pourra donc être amené par n'importe quel mouvement de translation selon une direction perpendiculaire à l'axe d'installation **A'1,** sans risquer d'interférer avec le dispositif **10.**

De façon classique, chaque récipient **14** est déplacé en translation par un système de manutention automatisé, par exemple un convoyeur, non représenté mais connu en soi, pour amener le récipient dans la zone d'installation, pour le positionner au mieux dans la zone d'installation afin que le récipient soit placé avec son axe central théorique en concordance avec l'axe installation **A'1,** et pour sortir le récipient de la zone installation. Le convoyeur peut être par exemple un convoyeur à bandes qui supporte les récipients par leur face latérale ou un convoyeur qui supporte le récipient par le col. De tels convoyeurs laissent le fond et le jable apparents depuis le dessous.

Le dispositif et le procédé selon l'invention font appel à un capteur photoélectrique bidimensionnel **24,** aussi appelé matriciel et destiné à acquérir une image bidimensionnelle de la portion d'intérêt **16** de la paroi latérale **18** du récipient. Ce capteur matriciel, peut être incorporé dans une caméra et il peut être par exemple du type CCD ou CMOS. Le capteur **24** est par exemple constitué d'une matrice bidimensionnelle d'éléments photoélectriques. Le capteur est généralement associé à un circuit électronique de traitement des signaux fournis par les éléments photoélectriques pour délivrer un signal analogique ou numérique représentatif de l'image reçue par le capteur. Ce signal représentatif de l'image reçue par le capteur peut ensuite être délivré à un dispositif de traitement d'images et/ou à un dispositif de visualisation et/ou à un dispositif de stockage d'images (non représentés). Le capteur **24** est généralement associé à un système de conjugaison optique qui transforme un agencement de luminosité dans une zone objet en un agencement de luminosité dans une zone image, par exemple un système objectif optique **26** qui peut comporter un ou plusieurs moyens optiques, notamment une ou plusieurs lentilles de réfraction, et éventuellement un diaphragme, associés pour permettre la formation d'une image sur le capteur.

Avantageusement, le dispositif selon l'invention est compatible avec le système de manutention assurant le déplacement du ou des récipients selon une direction perpendiculaire à leur axe central théorique **A1**. Le système de manutention et le dispositif de l'invention peuvent être interfacés mécaniquement, par exemple en étant fixés sur un bâti commun ou l'un étant fixé sur un bâti de l'autre. Ils peuvent aussi avantageusement être interfacés électroniquement. Ainsi, un système de contrôle du système de manutention et un dispositif de traitement d'images peuvent avantageusement échanger des informations, dans un sens ou dans les deux sens, directement ou par l'intermédiaire d'un dispositif central de contrôle.

Dans un procédé selon l'invention, il est prévu de former, par l'intermédiaire d'un élément optique, une image plane de la portion d'intérêt de la paroi du récipient, dans le champ de vision d'un capteur photoélectrique matriciel.

Le dispositif comporte un système optique **28** interposé entre la zone d'installation **(A'1, P)** du récipient et le capteur pour former sur la surface du capteur **24** une image de la portion d'intérêt de paroi latérale externe d'un récipient placé dans la zone d'installation. Ce système optique comprend au moins un élément optique **30** qui est ici agencé entre le système objectif **20** et la zone d'installation. Dans l'exemple illustré, le système optique **28,** entre le capteur **24** et la zone d'installation, comprend ainsi le système d'objectif **26** et le ou les éléments optiques **30.**

L'image qui est formée sur le capteur **24** est conjuguée optiquement avec la portion d'intérêt **16** de la paroi **18** du récipient **14,** par l'intermédiaire du système optique **28.** Ainsi des rayons lumineux, issus d'un point considéré de la portion d'intérêt **16** de la paroi **18** du récipient **14,** et ayant des orientations initiales différentes tout en étant orientés de manière à traverser le système optique **28,** se concentrent tous en un point unique de l'image formée sur le capteur **24.**

Dans l'exemple illustré sur les **figures 1****,** **2** et **4****,** le capteur **24,** son système objectif **26,** l'élément optique **30** et la zone d'installation sont alignés dans cet ordre du haut vers le bas selon le même axe d'installation **A'1.** L'axe optique du système objectif **26** est de préférence confondu avec l'axe d'installation **A'1.** Les **figures 6** à **12** illustrent une autre configuration dans laquelle l'axe optique n'est pas rectiligne, mais segmenté, par exemple par intégration d'un miroir de renvoi dans le système objectif. Ainsi, un miroir de renvoi **32,** qui est ici incliné à 45° par rapport à l'axe d'installation **A'1,** est agencé sur l'axe optique entre le capteur et l'élément optique, plus précisément entre le système objectif **26** est l'élément optique **30.** Le miroir de renvoi **32** définit ainsi un premier segment **A"1** de l'axe optique, côté capteur **24,** qui est agencé à 90° par rapport à l'axe d'installation **A'1** et qui correspond alors à l'axe optique du capteur et du système objectif **26,** et un second segment, de l'autre côté du miroir de renvoi **32,** qui est agencé en concordance avec l'axe d'installation **A'1.** De la sorte, on peut prendre la convention que le système optique définit, dans la zone d'installation, un axe optique ou un segment d'axe optique qui définit l'axe d'installation **A'1.**

Selon un mode de réalisation de l'invention, l'élément optique **30** comporte une surface de réflexion **31** de révolution autour de l'axe d'installation **A'1** et présente un diamètre minimal supérieur à un diamètre maximal de la portion d'intérêt de la paroi latérale externe d'un récipient susceptible d'être reçu dans la zone d'installation.

De préférence, l'élément optique **30** comporte un réflecteur ou miroir de révolution formant la surface de réflexion **31** évasé vers le bas, coaxial avec l'axe d'installation et interposé entre la zone d'installation et le capteur **24,** le réflecteur présentant un diamètre minimal supérieur à un diamètre maximal de la portion d'intérêt **16** de la paroi latérale externe **18** d'un récipient susceptible d'être reçu dans la zone d'installation. Dans les modes de réalisation illustrés, le réflecteur est tronconique, et la surface de réflexion est donc concave dans un plan perpendiculaire à l'axe d'installation **A'1.** En variante la surface de réflexion de l'élément optique pourrait être non plus tronconique mais une surface de révolution à double courbure, évasée, générée par la révolution, autour de l'axe d'installation **A'1**, d'un tronçon de courbe non droite, par exemple un tronçon de parabole, d'hyperbole ou d'ellipse. Dans un plan radial, cette surface présentera par exemple un profil concave ou convexe, tout en conservant son profil concave dans un plan perpendiculaire à l'axe d'installation **A'1.**

Dans les exemples illustrés, l'élément optique **30** comporte un miroir optique tronconique **31** réalisé, de préférence, sur la face interne d'une couronne annulaire. Le miroir optique **31** présente ainsi une forme tronconique de révolution d'axe de symétrie l'axe d'installation **A'1.** L'axe de symétrie de révolution du miroir optique **31** peut définir l'axe d'installation **A'1.** Le miroir optique **31** présente une inclinaison par rapport à l'axe optique de sorte que le grand diamètre du miroir optique **31** se trouve situé au-dessous de son petit diamètre. Le miroir optique **31** possède ainsi un angle d'inclinaison **β,** considéré dans un plan radial par rapport à la verticale **V** parallèle à l'axe d'installation **A'1**, qui correspond au demi-angle au sommet du tronc de cône. Le miroir optique **31** présente une hauteur « **h** » et un petit diamètre interne « **d** » pris au niveau de sa petite base. Il doit être considéré que le miroir optique **31,** est adapté pour donner au capteur photoélectrique **24** un champ de vision périphérique **C** à 360° autour de l'axe installation **A'1.** Ce champ de vision périphérique, tourné vers l'axe d'installation depuis le miroir optique **31,** et délimité entre deux cônes **C1** et **C2** ayant l'axe d'installation comme axe de symétrie. Les deux cônes **C1** et **C2** sont décalés axialement dans la zone d'installation, ils sont évasés vers le bas, chacun avec leur sommet dans la zone d'installation, et ils peuvent présenter une différence de conicité. Le cône le plus ouvert **C1,** passant par le grand diamètre de la surface de réflexion **31,** est agencé en dessous du cône **C2** passant par le petit diamètre de la surface de réflexion **31. C1** et **C2** ne sont pas sécants à l'intérieur du diamètre défini par le miroir optique. De la sorte, le champ de vision du capteur **24** au travers du système optique en aval du miroir optique **31** présente un angle de champ **γ,** qui dans l'exemple est divergent, depuis le miroir optique **31.** Cela permet au capteur **24** d'observer la portion d'intérêt **16** de la paroi latérale externe **18** du récipient et de d'observer les reliefs **12** agencés sur cette portion d'intérêt **16.**

De plus, le miroir optique **31** est adapté pour présenter un angle d'élévation d'observation **α** permettant de collecter les rayons réfléchis par les reliefs **12.** L'angle d'observation **α** peut être défini, dans un demi-plan radial contenant l'axe d'installation **A'1** et délimité par cet axe, entre un plan perpendiculaire à l'axe d'installation **A'1** et une direction moyenne d'observation depuis le miroir optique **31.** Cette direction moyenne d'observation peut correspondre à une direction moyenne entre les deux cônes limite, **C1** et **C2,** c'est-à-dire une direction bissectrice de l'angle formé par ces cônes dans un demi-plan radial. Il doit ainsi être considéré que le champ de vision du capteur au travers du système optique **28,** en aval du miroir optique, dépend notamment de la taille du capteur et de la focale de l'objectif, mais également du diamètre **d,** de l'angle d'inclinaison **β** et de la hauteur **h** du miroir optique **31.** Le champ de vision au travers du miroir optique **31** influe sur l'étendue selon la direction de l'axe d'installation de la portion d'intérêt de la paroi latérale qui est vue par le capteur au travers du système optique **28.**

Dans d'autres modes de réalisation de l'invention, l'élément optique pourrait être réalisé non pas sous la forme d'un cône de réflexion mais sous la forme d'un prisme, notamment d'un prisme à réfraction de géométrie annulaire, ou d'une lentille de Fresnel, créant un champ de vision analogue à celui décrit ci-dessus.

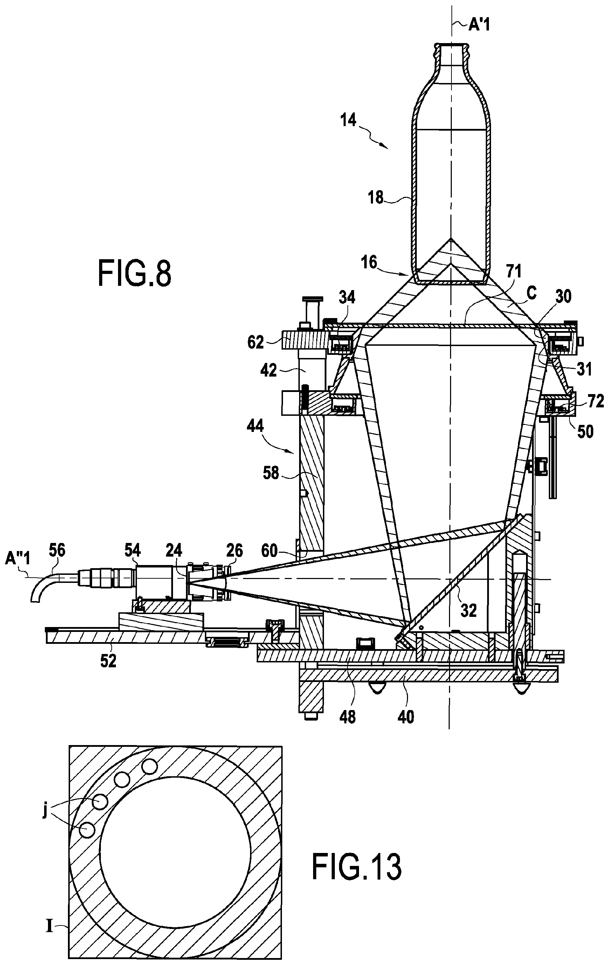

Du fait du champ de vision ainsi créé pour le capteur **24,** celui-ci est ainsi capable, au travers du système optique **28** et notamment grâce à l'élément optique **30,** d'observer le jable d'un récipient installé convenablement dans la zone d'installation, sous la forme d'une image formée dans le plan du capteur **24** qui est perpendiculaire à l'axe optique, alors que la surface externe du jable est, sur le récipient, une surface qui est parallèle à l'axe d'installation qui prolonge l'axe optique dans la zone d'installation, ou une surface qui forme, au niveau des reliefs, un angle aigu supérieur à 45° par rapport à un plan normal à cet axe d'installation. L'élément optique **30** transforme ainsi une surface tridimensionnelle en une surface plane sur le plan du capteur. La **figure 13** illustre, à titre d'exemple, une image **I** susceptible d'être reçue par le capteur **24.** L'image reçue **I** fait apparaître une couronne annulaire, dans le plan du capteur, correspondant au jable et dans laquelle apparaissent des informations **j** correspondant chacune à un relief **12.** Toutefois, l'image formée dans le plan du capteur par le système optique **28** n'est susceptible d'être perçue par le capteur photoélectrique **24,** et donc transformée en un signal image, que dans la mesure où une portion au moins de cette image reçue est illuminée. Cette illumination suppose que des rayons lumineux soient réfléchis par réflexion spéculaire sur la portion d'intérêt **16** de la paroi latérale **18** qui est dans le champ de vision du capteur.

Selon un aspect de l'invention, le procédé prévoit d'éclairer une portion d'intérêt de la paroi latérale externe du récipient, limitée selon la direction de l'axe d'installation **A'1** mais s'étendant à 360° autour de l'axe d'installation **A'1,** à l'aide d'au moins une source lumineuse principale **34** fournissant un faisceau lumineux incident périphérique comprenant des rayons lumineux radiaux contenus dans un plan radial contenant l'axe d'installation, lesdits rayons radiaux étant dirigés vers l'axe d'installation, et le faisceau comportant, dans un même plan radial, des rayons radiaux non parallèles.

Ainsi, parallèlement, un dispositif selon l'invention comporte à cet effet un système d'éclairage comportant au moins une source lumineuse principale **34,** périphérique et axée sur l'axe d'installation, et apte à fournir, dans la zone d'installation, un tel faisceau lumineux incident périphérique.

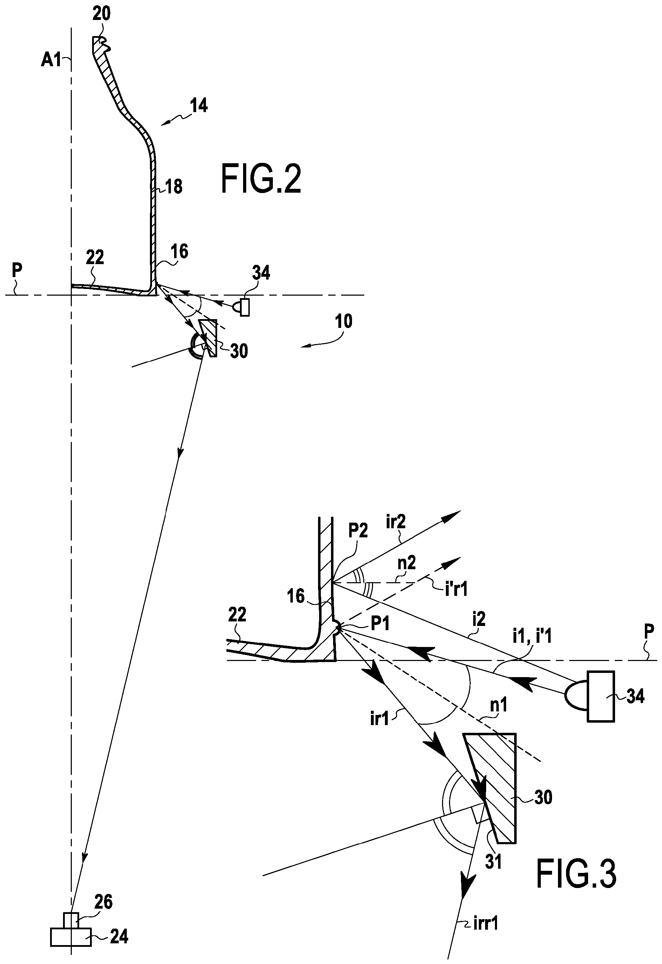

Les rayons radiaux sont de préférence dirigés vers l'axe d'installation **A'1,** sans être nécessairement perpendiculaires à cet axe. Au contraire, il est illustré sur la **Figure 2** que le faisceau lumineux incident périphérique peut contenir des rayons radiaux qui forment un angle avec un plan perpendiculaire à l'axe d'installation **A'1** compris de préférence entre 0 et 45 degrés. De préférence, le faisceau lumineux contient des rayons radiaux selon un éventail angulaire continu ou sensiblement continu dans un plan radial. Cet éventail peut avoir une étendue angulaire d'au moins 30 degrés, en partant d'un point de la source lumineuse principale **34,** voire plus. Les rayons contenus dans cet éventail peuvent former un angle, avec un plan perpendiculaire à l'axe central théorique, compris entre 5 et 40 degrés. Le faisceau lumineux délivré par la source principale **34** est un faisceau qui doit être adapté pour éclairer la portion d'intérêt **16** de la paroi latérale d'un récipient que l'on veut inspecter. On adaptera donc notamment l'éventail lumineux de la source dans un plan radial à cette contrainte. En dehors de la nature de la source lumineuse principale **34** (diodes, fibres optiques, tube fluorescent, etc...), qui peut déterminer en partie l'étendue de cet éventail, la source lumineuse principale peut comporter un ou plusieurs caches et/ou un ou plusieurs réflecteurs, comme décrit dans le document EP-1.010.126, et/ou un ou plusieurs prismes de réfraction pour limiter ou étendre l'éventail de lumière émis dans un plan radial. On notera ici que l'on ne se préoccupe pas d'éventuels rayons qui seraient émis par la source lumineuse selon des plans non radiaux. Toutefois, on peut avoir intérêt à utiliser une source lumineuse où l'importance des rayons non radiaux, donc non compris dans un plan radial, soit réduite. A l'extrême, il est envisageable d'éclairer la portion d'intérêt **16** avec un faisceau périphérique purement radial, ne comportant que des rayons radiaux. De manière générale, la source lumineuse principale pourra être identique ou similaire à celle décrite dans le document EP-1.010.126 auquel on se référera utilement.

La source lumineuse **34** présente un diamètre supérieur au diamètre de la portion d'intérêt de la paroi latérale des récipients que l'on souhaite contrôler à l'aide du dispositif. Cette source lumineuse annulaire **34** est agencée au-dessous de la zone d'installation, donc en dessous de la portion d'intérêt de la paroi latérale des récipients. Dans un demi-plan radial contenant l'axe d'installation **A'1** et délimité par cet axe installation **A'1,** la source lumineuse annulaire **34** correspond à une source qui peut être ponctuelle, ou qui au contraire peut avoir une certaine étendue dans ce demi-plan comme illustré sur les figures. De préférence, la source principale **34** est vue d'un point de la portion d'intérêt de la paroi latérale du récipient selon un angle de vision inférieur à 15 degrés, de préférence inférieur à 5 degrés.

On remarque que, dans l'exemple illustré de l'invention :
- le système d'éclairage, y compris la source lumineuse principale **34,**
- le capteur **24,**
- et le système optique **28,** y compris l'élément optique **30** et sa surface de réflexion **31,**
sont agencés en dessous de la zone d'installation, et ne sont donc pas susceptibles d'interférer avec la trajectoire des récipients si ceux-ci sont déplacés perpendiculairement à l'axe d'installation **A'1,** quelle que soit l'orientation de leur trajectoire dans un plan perpendiculaire à cet axe **A'1.**

Un procédé et un dispositif tels que décrits ci-dessus cherchent à exploiter le fait que le faisceau lumineux incident est au moins en partie réfléchi par réflexion spéculaire sur la portion d'intérêt de la paroi latérale externe et sur les reliefs, et qu'au moins une partie des rayons du faisceau qui sont réfléchis sont récupérés au travers du système optique **28** sur le capteur **26.** Toutefois, pour que le dispositif ou le procédé fonctionne au mieux, il faut s'assurer que le système optique **28** récupère uniquement ou majoritairement des rayons réfléchis par les reliefs **12,** et au contraire récupère le moins possible de rayons réfléchis par des zones de la portion d'intérêt **16** qui sont adjacentes aux reliefs **12.**

Un procédé selon l'invention peut comporter l'étape consistant à assurer le traitement de l'image reçue par le capteur, afin de détecter les reliefs. Un tel traitement d'images peut être réalisé par un dispositif de traitement d'images, notamment un dispositif informatique, qui peut être éventuellement intégré à un dispositif selon l'invention ou qui peut être interfacé électroniquement avec le dispositif selon l'invention, ou qui peut être distinct du dispositif. Dans ce cas, des données correspondant aux signaux d'images délivrées par le capteur **24** sont transférées par des moyens connus au dispositif de traitement.

On a illustré sur les **Figures 2** et **3** un exemple d'un trajet d'un rayon lumineux émis par la source lumineuse principale **34,** réfléchi par un relief **12** d'un récipient dans une direction telle que le rayon réfléchi est récupéré par le système optique **28,** par réflexion sur l'élément optique **30,** et ainsi dirigé sur le capteur **24** de manière à former un point lumineux d'une image sur ce capteur. Sur la **figure 3****,** on voit notamment un rayon **i1** émis par la source lumineuse principale **34** en direction d'un relief **12** dans un plan radial. On illustre aussi un rayon **i2** émis par la source lumineuse principale **34** dans un plan radial et venant impacter la portion d'intérêt **16** de la paroi latérale externe **18** à côté d'un relief, ici au-dessus du relief dans la direction de l'axe d'installation **A'1.** Comme, dans cet exemple, le récipient **14** présente un jable droit, la normale **n2** au point **P2** d'impact du rayon **i2** est sensiblement perpendiculaire à l'axe d'installation **A'1,** de sorte que le rayon **i2** est réfléchi par réflexion spéculaire sur la surface externe de la paroi latérale **18** sous la forme d'un rayon réfléchi **ir2** qui est orienté vers le haut, soit à l'opposé du dispositif selon l'invention, et n'est donc pas susceptible d'être reçu par le capteur **24** au travers du système optique **28.** Au contraire, le rayon **il** émis par la source lumineuse principale **34** impacte le relief **12** en un point **P1** du relief **12** dont la normale **n1,** par rapport à la surface du relief **12** au point **P1,** est orientée vers le bas de telle sorte que le rayon **il** est réfléchi sous la forme d'un rayon **ir1** en direction de l'élément optique **30,** lequel réfléchit à son tour ce rayon par réflexion spéculaire sous la forme d'un rayon **irr1** en direction du capteur **24** au travers du système d'objectif optique **26.** Ainsi, la zone du capteur **24** correspondant au point **P1** est illuminée de sorte que le capteur délivre une image de ce point où il apparait illuminé.

On a illustré aussi sur la **figure 3** le cas d'un rayon confondu avec le rayon **i'1,** mais qui viendrait impacter la paroi latérale **18** en l'absence du relief **12.** Dans ce cas-là, vu la géométrie de la portion d'intérêt de la surface latérale externe **18** au voisinage immédiat du relief **12,** on voit que ce rayon serait réfléchi selon un rayon **i'r1,** sensiblement comme le rayon **ir2,** c'est-à-dire vers le haut à l'opposé du dispositif selon l'invention et ne serait donc pas reçu par le capteur **24** au travers du système optique **28.**

On notera qu'on a ici illustré sur la **figure 2** et sur la **figure 3** la situation dans un plan radial donné dans lequel on trouve un relief **12** sur la portion d'intérêt **16** de la paroi latérale **18.** Comme le système considéré, englobant le dispositif et le récipient, est un système de révolution autour de l'axe d'installation **A'1**, les parties adjacentes du système situées dans des plans radiaux très légèrement décalés angulairement autour de l'axe d'installation **A'1,** de part et d'autre du plan radial illustré sur la **figure 3****,** sont des parties adjacentes où le relief **12** n'est pas présent. Aussi, dans ces parties adjacentes, la réflexion selon le rayon **ir1** en direction de l'élément optique **30** n'est pas présente, puisqu'il n'y a pas de relief. Dans ces parties, aucun rayon émis par la source lumineuse principale **34** n'est réfléchi en direction du capteur **24** au travers du système optique **28** comportant l'élément optique **30.** De la sorte, l'image de ces parties adjacentes sur le capteur photoélectrique **24** n'est pas illuminée, de sorte que le capteur délivre une image dans laquelle ces zones apparaissent sombres.

On comprend donc que le dispositif selon l'invention exploite la géométrie particulière du relief **12** par rapport à la géométrie des zones adjacentes à ce relief sur la portion d'intérêt **16** de la paroi latérale **18.** Ces reliefs, ayant par définition une assez forte courbure générale de leur surface externe, présentent donc une grande variété de directions normales si l'on considère chacun des points de la surface d'un relief. Cela maximise la probabilité qu'un rayon émis par la source lumineuse principale **34** impacte un de ces points avec une direction d'incidence telle que le rayon réfléchi soit dirigé en direction de l'élément optique **30,** et soit donc ensuite dirigé par le reste du système optique **28** vers le capteur **24.** Au contraire, en dehors des reliefs, la portion d'intérêt 16 de la paroi latérale externe **18** présente une géométrie relativement uniforme au sens que deux points proches dans la portion d'intérêt **16,** en dehors de reliefs **12,** présentent des normales ayant une faible différence d'orientation. De ce fait, dans un cas favorable, la normale en un point de cette portion d'intérêt **16,** hors des reliefs **12,** est généralement orientée de telle sorte que les rayons réfléchis ne sont pas dirigés vers l'élément optique **30,** donc pas vers le capteur. Ainsi, dans un tel cas, il en résulte un contraste de luminosité dans l'image reçue par le capteur **24** entre les points image qui, comme le point **P1** du relief, réfléchissent la lumière en direction du capteur **24** au travers du système optique **28** et ceux qui, comme le point **P2** adjacent au relief, réfléchissent la lumière dans une autre direction. Ce contraste de luminosité de l'image reçue par le capteur **24** se traduit par un contraste dans le signal image délivré par le capteur **24** qui peut aisément être utilisé par un dispositif de traitement d'images pour identifier la présence d'un relief et sa localisation sur la portion d'intérêt **16** de la paroi latérale **18.**

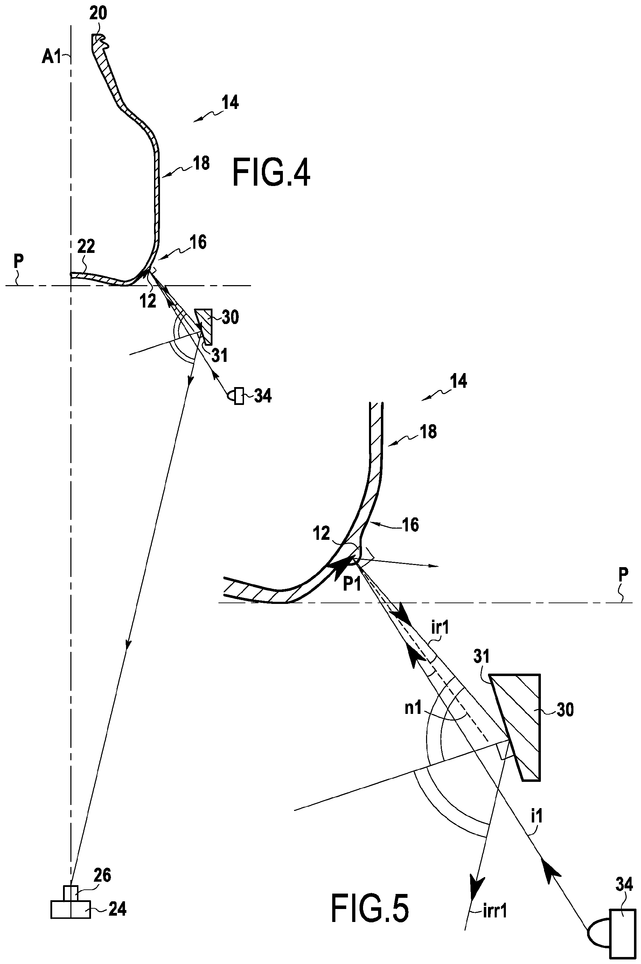

Les **figures 2** et **3** illustrent un cas relativement idéal dans lequel un tel contraste est obtenu pour les positions respectives de l'élément optique **30** et de la source lumineuse principale **34** illustrée sur cette figure. Cependant, il est apparu que pour certaines géométries de récipient, montrant des reliefs avec des géométries différentes et/ou montrant des jables de géométries différentes, par exemple des jables arrondis ou fortement inclinés au niveau des reliefs comme illustré sur les **figures 4** et **5****,** un tel contraste entre les reliefs et les zones adjacentes du jable n'était pas obtenu, ou insuffisamment, pour ces positions respectives de l'élément optique **30** et de la source lumineuse principale **34.** Cela peut résulter du fait qu'aucun des rayons lumineux émis par la source lumineuse principale n'est réfléchi par le relief en direction de l'élément optique **30,** et/ou du fait qu'à la fois des rayons réfléchis par le relief et des rayons réfléchis par les zones adjacentes au relief se dirigent vers l'élément optique **30** et donc vers le capteur **24.** Dans les deux cas, il en résulte sur le capteur une image qui ne permet pas d'observer de contraste lumineux entre les zones correspondant aux reliefs et les zones adjacentes aux reliefs. Les deux types de zones sont soit illuminées toutes les deux, soit noires toutes les deux, mais en tout cas non distinguables ou insuffisamment discriminables par un dispositif de traitement.

Aussi, selon un aspect de l'invention, il est prévu de déplacer, par translation selon la direction de l'axe d'installation **A'1**, la source lumineuse principale **34** fournissant le faisceau lumineux incident périphérique par rapport à l'élément optique **30,** pour modifier le contraste de l'image vue par le capteur **24** entre des zones de l'image correspondant aux reliefs **12** et des zones de l'image correspondant au reste de la portion d'intérêt **16** de la paroi du récipient.

A cet effet la source lumineuse principale **34** fournissant le faisceau lumineux incident périphérique est mobile en translation selon la direction de l'axe d'installation **A'1**, par rapport à l'élément optique **30.**

Grace à une telle disposition, pour un point donné **P1** d'un relief et un point donné **P2** appartenant à une zone adjacente à ce relief, le déplacement de la source lumineuse principale **34** fait que ces points sont illuminés avec un angle d'incidence différent et donc réfléchissent le rayon incident selon une direction différente de celle pour la position initiale de la source lumineuse principale **34.** Ainsi, on est susceptible de faire varier la direction de ces rayons réfléchis et donc de trouver une position de la source lumineuse **34** dans laquelle on a un contraste suffisant entre l'image, sur le capteur **24,** au travers du dispositif optique **28** comprenant l'élément optique **30,** d'un nouveau point P1 appartenant à ce même relief **12** et l'image, sur le capteur **24,** au travers du dispositif optique **28** comprenant l'élément optique **30,** de points **P2** appartenant à une zone adjacente à ce même relief sur la portion d'intérêt **16** de la paroi latérale **18.**

Expliqué autrement, si on considère un relief **12** pour lequel le voisinage a une orientation telle que des rayons en provenance de la source **34** sont, pour une position initiale de la source **34,** réfléchis vers l'élément optique 30, le déplacement de la source par translation suivant l'axe d'installation **A'1** permet de modifier l'angle d'incidence de la lumière sur chaque point **P2** au voisinage de ce relief. Ainsi, ce déplacement peut permettre d'obtenir, à partir d'un certain niveau de translation, que l'angle de réflexion de cette lumière sur chacun de ces points **P2** soit tel que la lumière ne soit plus renvoyée en direction de l'élément optique **30.** La forme du relief **12,** quant à elle, va faire qu'un autre point du relief **12,** très proche de **P1** mais ayant une normale orientée très différemment de celle en **P1**, va renvoyer de la lumière en direction de l'élément optique **30.** Pour cette position de la source **34,** le relief **12** sera vu clair sur un fond sombre correspondant à la zone adjacente au relief.

Sur les **figures 4** et **5****,** on a illustré le cas d'une bouteille comprenant un jable très incliné au niveau de la portion d'intérêt **16** par rapport à l'axe central théorique **A1**, cas dans lequel il apparaît que, au moins pour certaines géométries de reliefs, une position très différente de la source lumineuse principale **34** permet d'obtenir un bien meilleur contraste dans l'image reçue par le capteur **24** entre les zones correspondant aux reliefs et les zones adjacentes à ces reliefs. Sur ces **figures 4** et **5****,** on a repris les références relatives aux différents rayons entre la source lumineuse principale **34** et le capteur **24** de manière correspondante à ce qui est décrit dans la configuration des **figures 2** et **3****.** On remarquera que, dans la configuration illustrée sur les **figures 2** et **3****,** la source lumineuse principale **34** est, dans sa position optimale, agencée au-dessus de l'élément optique selon la direction de l'axe d'installation **A'1.** Au contraire, dans le cas des **figures 4** et **5****,** la source lumineuse principale **34** est, dans sa position optimale, agencée en dessous de l'élément optique **30** selon la direction de l'axe d'installation **A'1.** On voit donc que l'on est susceptible d'avoir intérêt à pouvoir déplacer la source lumineuse principale **34** sur une certaine plage de réglage entre deux positions extrêmes.

Avantageusement, un procédé selon l'invention peut comporter une étape d'optimisation du déplacement de la source lumineuse principale **34** consistant à rechercher au moins une position de la source selon la direction de l'axe d'installation **A'1** par rapport à l'élément optique **30** pour lequel un niveau de contraste lumineux entre les zones de l'image correspondant aux reliefs et des zones de l'image correspondant au reste de la portion d'intérêt de la paroi du récipient, notamment correspondant à des zones adjacentes au relief **12,** est supérieur à un niveau prédéterminé. Ce niveau prédéterminé de contraste pourra être un niveau fixe, ou un niveau variable, notamment en fonction de différents paramètres qui peuvent être liés au dispositif **10** et/ou au récipient **14.**

On peut d'ailleurs prévoir qu'une telle étape d'optimisation serait automatisée. Par exemple, le déplacement de la source serait assuré par des moyens de translation automatisée commandés par une unité centrale de commande. Cette unité centrale de commande piloterait les moyens de déplacement en analysant, pour un certain nombre de positions relatives de la source lumineuse principale **34** par rapport à l'élément optique **30,** le contraste lumineux des images obtenues jusqu'à trouver une position optimale de la source lumineuse **34** délivrant un bon contraste dans l'image entre les zones correspondant aux reliefs et les zones adjacentes. Bien entendu, une telle étape d'optimisation peut être faite manuellement par un opérateur qui disposerait de préférence d'une visualisation, par exemple sur un écran informatique, du signal image délivré par le capteur **24.** Un tel opérateur peut alors rechercher, dans la plage de réglage, une position optimale de la source lumineuse **34** pour laquelle l'image pourra être facilement interprétée par un dispositif de traitement d'images.

De manière générale, on pourra prévoir que la source lumineuse principale soit mobile entre une multitude de positions bloquées distinctes selon la direction de l'axe d'installation, les positions bloquées étant comprises entre deux positions extrêmes. Ainsi, il y aura au moins deux positions bloquées de la source lumineuse principale **34** par rapport à l'élément optique **30,** par exemple correspondant à des positions extrêmes et, de préférence, il y aura au moins trois positions bloquées, notamment avec au moins une position intermédiaire bloquée entre deux positions extrêmes.

Ces positions bloquées de la source lumineuse **34** pourront être des positions discrètes prédéfinies par rapport à l'élément optique **30.** Dans un autre mode de réalisation, la source lumineuse principale **34** pourra être bloquée dans une position quelconque par rapport à l'élément optique **30,** entre deux positions extrêmes.

De préférence, le dispositif **10** comporte des moyens de commande du déplacement de la source lumineuse principale **34** en translation selon la direction de l'axe d'installation, par rapport à l'élément optique **30.** Ces moyens de commande pourront être des moyens mécaniques, hydrauliques, électriques, magnétiques etc. Ces moyens de commande seront avantageusement motorisés. Ils pourront être associés à des moyens de guidage en translation de la source lumineuse **34** par rapport à l'élément optique **30.**

De préférence, le dispositif **10** comporte des moyens de blocage de la source lumineuse principale dans ses positions bloquées par rapport à l'élément optique. Avantageusement, les moyens de blocage seront des moyens de blocage mécanique, par exemple par serrage ou par coopération de formes.

On a illustré de manière schématique sur les **figures 6** à **8****,** un dispositif conforme à l'invention, permettant de mettre en oeuvre le procédé selon l'invention. Le dispositif **10** comporte une embase **40** qui est destinée à former un élément fixe du dispositif en cours de fonctionnement et qui pourra ainsi être par exemple fixe par rapport à une ligne de convoyage de récipient. Par exemple, cette embase **40** pourra être fixée à un bâti lui-même lié à l'installation de convoyage. Ce bâti peut-être le bâti d'une station d'inspection associée à une ligne de convoyage. L'embase **40** est par exemple sous la forme d'une plaque agencée dans un plan perpendiculaire à l'axe d'installation **A'1,** en l'occurrence donc une plaque destinée à être agencée dans un plan horizontal. Dans l'exemple illustré, la plaque présente sensiblement une forme carrée. Sur un coté frontal de ce carré, l'embase **40** est munie de deux colonnes de guidage **42,** par exemple agencées près des extrémités latérales du côté frontal, et s'étendant selon une direction verticale parallèle à la direction de l'axe d'installation.

Le dispositif **10** comporte par ailleurs une platine primaire **44** qui porte l'élément conique **30.**

Selon un mode de réalisation avantageux, la platine primaire **44** portant l'élément optique **30** est mobile en translation par rapport à l'embase **40** selon la direction de l'axe installation de manière à permettre la mobilité de l'élément optique **30** par rapport à la direction de l'axe d'installation, donc par rapport à un éventuel récipient agencé dans cette zone d'installation. En effet, le dispositif peut être utilisé avec des récipients de géométries différentes, notamment en termes de position, de hauteur et de diamètre de la portion d'intérêt. Plutôt que d'avoir éventuellement à adapter une ligne de convoyage pour amener les récipients dans une position favorable par rapport au dispositif, il peut être largement plus aisé de prévoir cette mobilité de l'élément optique **30** afin de pouvoir amener le champ de vision périphérique **C,** par lequel le capteur **24** est susceptible d'observer la portion d'intérêt **16** de la paroi latérale **18** du récipient au travers du système optique **28** dont l'élément optique **30** fait partie, en coïncidence avec cette portion d'intérêt **16** que l'on souhaite observer. En d'autres termes, l'élément optique est mobile par rapport à la zone installation, selon la direction de l'axe d'installation, pour amener la portion d'intérêt **16** de la paroi du récipient dans le champ de vision du capteur matriciel, au travers du système optique **28** comprenant l'élément optique **30.**

Cette mobilité de l'élément optique **30,** par rapport à l'embase **40,** et donc par rapport à un récipient donné ayant une position dans la zone d'installation, peut se combiner avec une mobilité de l'élément optique **30** par rapport au capteur **24.** Ainsi, on pourrait prévoir que l'élément optique **30** soit mobile par rapport au capteur **24** selon la direction de l'axe d'installation **A'1.** Dans ce cas, le capteur photoélectrique **24** pourrait par exemple être monté sur l'embase **40.** L'élément optique **30** étant alors monté sur la platine primaire **44** mobile par rapport à l'embase **40,** on obtiendrait la possibilité d'un déplacement de l'élément optique **30** par rapport au capteur **24.**

Cependant, dans l'exemple de réalisation illustrée sur les **figures 6** à **12****,** l'élément optique **30** a une position fixe par rapport au capteur photoélectrique **24.** Particulièrement, ils peuvent être montés sur la même platine primaire **44.** Comme cette platine primaire **44** est mobile par rapport à l'embase **40,** donc par rapport à la zone de réception et à un récipient agencé dans cette zone de réception, il est possible, en déplaçant la platine primaire **44,** de déplacer le champ de vision **C** par lequel le capteur **24** observe la zone d'installation par l'intermédiaire de l'élément optique **30.**

Dans l'exemple, la platine primaire est guidée sur les colonnes **42.** Son déplacement est commandé par un mécanisme manuel à levier de commande **46** dont une extrémité est montée de manière pivotante autour d'un axe latéral **A2** perpendiculaire à l'axe d'installation sur l'embase **40.** Le levier **46** coopère avec une tige de commande **49** d'axe latéral **A3** parallèle à l'axe **A2,** la tige de commande **49** étant liée à la platine primaire **44.** On peut prévoir que la tige de commande **49** soit montée coulissante par rapport au levier **46** selon la direction du levier, ou qu'elle soit montée coulissante selon une direction perpendiculaire à l'axe **A3** et à l'axe d'installation par rapport à la platine primaire **44** pour éviter toute hyperstaticité du système de commande. Dans le schéma de la **figure 7****,** il est illustré le cas où le levier **46** peut coulisser dans la tige de de commande **49.** On comprend ainsi que, en faisant pivoter le levier **46** par rapport à son axe **A2** par rapport à l'embase **40,** on va commander un déplacement en hauteur de la platine intermédiaire **44,** et donc de l'élément optique **30** par rapport à l'embase **40** selon la direction de l'axe d'installation. Des moyens de blocage, par exemple par serrage ou par blocage mécanique sont prévus pour permettre de bloquer la platine intermédiaire par rapport à l'embase **40.** De préférence, on prévoira la possibilité de bloquer la platine primaire **44** dans une multitude de positions bloquées. Ces positions peuvent être discrètes. Alternativement, la platine intermédiaire **44** peut être bloquée dans l'une quelconque de ses positions entre deux positions extrêmes haute et basse.

Dans l'exemple de réalisation illustré, à la fois l'élément optique **30** et le capteur photoélectrique **24** sont embarqués sur la platine intermédiaire **44,** donc fixes l'un par rapport à l'autre, et mobiles par rapport à l'embase.

La platine primaire **44** peut comporter un plateau inférieur **48** et un plateau supérieur **50** qui sont espacés selon la direction de l'axe d'installation et qui s'étendent sensiblement dans des plans perpendiculaires à l'axe d'installation, en présentant dans le cas de figure une forme sensiblement carrée ou rectangulaire. Le plateau supérieur **50** porte une couronne annulaire qui supporte l'élément optique **30** et il est de ce fait ajouré en son centre d'une ouverture circulaire qui correspond au moins au grand diamètre de l'élément optique **30,** qui est ici représenté par un réflecteur tronconique, dont la surface interne concave forme la surface de réflexion axée sur l'axe d'installation, évasée vers le bas. Dans l'exemple illustré, le tronc de cône de l'élément optique **30** est agencé au-dessus du plateau supérieur **50.**

Le plateau inférieur **48** porte le capteur photoélectrique. Dans le mode de réalisation illustré, le système optique comporte un miroir de renvoi **32** agencé à 45° qui est donc installé sensiblement au centre du plateau inférieur **48** de manière à former une image **A"1** de l'axe d'installation **A'1** qui s'étend à 90° de l'axe d'installation selon une direction frontale. Dans l'exemple illustré, le miroir de réflexion **32** est un miroir plan qui est parallèle aux axes latéraux **A2** et **A3** du système de commande de déplacement de la platine intermédiaire. Pour obtenir un trajet optique de longueur suffisante pour le système optique **28,** le capteur **24,** et son système d'objectif **26** sont montés sur une prolongation frontale **52** du plateau inférieur **48** de la platine intermédiaire. Dans l'exemple illustré notamment à la **figure 8****,** le capteur photoélectrique **24** et le système d'objectif **26** sont accolés à un boîtier **54** qui peut renfermer un circuit électronique de traitement des signaux fournis par les éléments photoélectriques pour délivrer un signal représentatif de l'image reçue par le capteur. Le boîtier comporte une connectique pour connecter, par exemple par une liaison filaire **56** le capteur **24** à un dispositif de traitement d'images (non représenté).

Dans l'exemple illustré, les plateaux **48, 50** de la platine intermédiaire **44** sont reliés l'un à l'autre par une paroi frontale **58,** notamment pour maintenir l'écartement selon la direction de l'axe d'installation entre les deux plateaux. La plaque frontale **58** s'étend par exemple selon un plan perpendiculaire à l'axe frontal, au niveau des deux colonnes de guidage **42.** Elle est alors pourvue d'une fenêtre **60** pour permettre le passage du trajet optique entre le système objectif **26** et le miroir de renvoi **32.** En réalité on peut prévoir que la platine **44** comporte aussi des parois latérales et arrière (non représentées) pour former ainsi une boite fermée préservant le système optique **28** des poussières et des lumières parasites. La caméra peut aussi être protégée par un boîtier tel que montré sur la **Figure 6****.**

Le dispositif **10** selon l'invention comporte par ailleurs une platine secondaire **62,** qui est agencée au-dessus de la platine primaire **44,** notamment au-dessus du plateau supérieur **50** et de son élément optique tronconique **30,** et qui porte la source lumineuse principale **34.** La platine secondaire **62** se présente par exemple sous la forme d'un plateau de forme carrée sensiblement perpendiculaire à l'axe d'installation **A'1.** Le plateau de la platine secondaire **62** est percé en son centre d'une ouverture de grande dimension permettant le passage du champ de vision C. La source lumineuse principale **34** est par exemple formée par une série de diodes disposées par exemple dans un logement annulaire creusé dans la surface supérieure de la platine secondaire **62.** Les diodes sont disposées selon un cercle autour de l'axe installation A'1. Elles peuvent être toutes tournées radialement en direction de cet axe avec un angle d'inclinaison par rapport à l'axe. Elles éclairent la portion d'intérêt **16** de la paroi latérale **18** du récipient **14.**

Comme discuté, la platine secondaire **62** est mobile par rapport à la platine primaire **44** de manière à pouvoir assurer un déplacement de la source lumineuse principale **34** par rapport à l'élément optique **30.** Dans l'exemple illustré, la platine secondaire **62** est elle aussi guidée en translation sur les colonnes des guidages **42.** Pour commander le déplacement de la platine secondaire **62** par rapport à la platine primaire **44,** il est prévu des moyens de commande de déplacement qui peuvent par exemple prendre la forme d'une bascule **64** dont une extrémité est liée au plateau supérieur **50** de la platine primaire **44,** par une première liaison pivot autour d'un premier axe frontal **A4** perpendiculaire à l'axe d'installation, et dont une seconde extrémité est liée à la platine secondaire **62,** par une seconde liaison pivot autour d'un second axe frontal **A5,** parallèle au premier axe frontal **A4,** l'une au moins des deux liaisons pivot, de préférence la liaison pivot avec la platine secondaire **62,** pouvant par ailleurs assurer un déplacement selon un axe latéral perpendiculaire à l'axe d'installation et à l'axe frontal considéré. La bascule **64** est pourvue d'un bras de commande **66,** sensiblement perpendiculaire à un axe frontal et à la direction joignant les deux axes frontaux **A4, A5.** L'extrémité libre du bras de commande **66** comporte un bouton de préhension **68** permettant de manipuler la bascule **64** et de la faire pivoter par rapport à l'axe frontal **A4,** provoquant un déplacement relatif de la platine secondaire **62** par rapport à la platine primaire **44.** On commande ainsi le déplacement, selon la direction de l'axe d'installation, de la source lumineuse principale **34** par rapport à l'élément optique **30.**

Dans cet exemple de réalisation, il est prévu des moyens de blocage de la platine secondaire **62** dans une série de position discrètes prédéfinies par rapport à la platine primaire **44.** Dans le mode illustré, le blocage est opéré par coopération de formes. Pour ce faire, on voit que l'extrémité libre du bras de commande **66** se déplace selon un arc de cercle par rapport à l'axe frontal A4 devant la paroi frontale **58** de la platine primaire. Cette paroi frontale **58** est munie d'une série de renfoncements **70,** par exemple cylindriques ou coniques selon un axe frontal, disposés en arc de cercle autour de l'axe frontal **A4.** Le bras de commande **66** est muni d'un pointeau dirigé selon un axe frontal en direction de la surface frontale, ce pointeau pouvant venir se bloquer dans l'un ou l'autre des renfoncements **70** pour bloquer le bras de commande **66** par rapport à la paroi **58** est ainsi bloquer la position, selon l'axe d'installation **A'1,** de la platine secondaire **62** par rapport à la platine primaire **44.** Pour passer d'une position à l'autre, le pointeau est dégagé élastiquement d'un renfoncement **70** vers un autre renfoncement conique. L'élasticité est assurée par exemple par l'élasticité du bras de commande **66** selon une direction frontale ou en assurant un montage élastique du pointeau sur le bras de commande **66** selon la direction de l'axe frontal.

Alternativement, le pointeau pourrait être formé par une extrémité du bouton de préhension **68** qui serait montée traversant de part et d'autre de l'extrémité libre du bras **66.** Le bouton **68** serait alors mobile selon la direction de l'axe frontal par rapport au bras de commande **66** et sollicité élastiquement en direction de la surface frontale avec possibilité, moyennant un effort de traction selon la direction opposée, de dégager le pointeau d'un renfoncement **70** pour permettre le déplacement du bras de commande **66** et ainsi permettre un déplacement relatif de la source lumineuse principale **34** par rapport à l'élément conique **30.**

On comprend que, dans le dispositif selon l'invention, les moyens de déplacement de l'élément optique **30** par rapport à l'embase **40** ne sont pas essentiels puisque la même fonction pourrait être réalisée, par exemple, par un positionnement différent des récipients dans la zone d'installation en fonction de leur géométrie. Toutefois, en présence de tels moyens, il est avantageux de prévoir que les moyens de déplacement de la source lumineuse principale **34** par rapport à l'élément optique **30** puissent opérer indépendamment des moyens de déplacements de l'élément optique **30** par rapport à l'embase **40.** Ainsi, on peut modifier l'orientation de l'éclairage par rapport au champ de vision **C** du capteur **24** sans déplacer ce champ de vision par rapport au récipient.

Ainsi, en cours d'utilisation du dispositif, on peut prévoir une étape de déplacement de l'élément optique **30** selon la direction de l'axe d'installation A'1 pour amener l'image de la portion d'intérêt **26** de la paroi du récipient **18** dans le champ de vision du capteur matriciel **24,** et une étape consistant à déplacer la source lumineuse principale **34** par rapport à l'élément optique **30** qui peut alors être mise en oeuvre après l'étape de déplacement de l'élément optique **30.**

En revanche, par construction, dans l'exemple illustré, les moyens de commandes de déplacement de l'élément optique **30** provoquent le déplacement simultané de la source lumineuse **34** avec l'élément optique par rapport à l'embase **40.** En effet, cela résulte du fait que la platine secondaire **62** est libre de coulisser par rapport à l'embase **40** alors qu'elle est liée à la platine primaire **44** par la bascule **64** qui fige la position relative entre la platine secondaire **62** et la platine primaire **44,** donc entre la source lumineuse principale **34** et l'élément optique **30.** Ainsi, un déplacement de la platine primaire **44** par rapport à l'embase **40** entraîne un déplacement égal de la platine secondaire **62** par rapport à l'embase **40,** et donc par rapport à la zone installation.

Dans l'exemple illustré, la platine secondaire **62** porte par ailleurs une plaque supérieure **71** en verre transparent destinée à protéger l'ensemble du dispositif **10** de tout débris venant du haut mais laissant passer à la fois le champ de vision du capteur **24** et le faisceau lumineux généré par le système d'éclairage.

Dans l'exemple illustré, notamment à la **figure 8****,** la platine secondaire **62** est illustrée dans sa position la plus basse par rapport à la platine primaire **44.** On voit que dans cette position, la source lumineuse principale **34** est sensiblement à la même hauteur que l'élément optique **30,** voire au-dessus.

Ainsi, le dispositif **10** illustré sur les **figures 6** à **8** ne permet un déplacement de la source lumineuse principale **34** que sur une certaine plage de positions entre deux positions extrêmes, cette plage étant agencée de manière générale entre l'élément optique **30** et la zone d'installation, donc au-dessus de l'élément optique **30.** Cette plage de réglage est la plage préférentielle de réglage permettant d'obtenir un contraste satisfaisant dans l'image reçue par le capteur entre les zones images des reliefs et les zones images des zones adjacentes aux reliefs. Cependant, on a vu en relation avec les **figures 4** et **5** que, pour certains cas de figure correspondant à des géométries particulières de récipient, il pouvait être nécessaire que le faisceau lumineux incident périphérique soit généré par une source lumineuse située en dessous de l'élément optique **30.** On pourrait bien entendu prévoir un dispositif dans lequel la source lumineuse principale serait mobile par rapport à l'élément optique **30** selon une plage de positions étendue couvrant toutes les positions nécessaires, y compris des positions situées à l'opposé de la zone d'installation par rapport à l'élément optique **30,** c'est-à-dire en dessous de l'élément optique **30.** Dans ce cas, la source lumineuse principale **34** serait mobile entre au moins deux positions extrêmes selon la direction de l'axe d'installation qui seraient chacune de part et d'autre de la position axiale de la surface de réflexion **31** de l'élément optique **30.**

Cependant, dans la mesure où ces géométries sont des géométries atypiques, il peut paraître plus judicieux de prévoir, pour ces cas-là, une source lumineuse auxiliaire **72,** décalée de la source lumineuse principale **34** selon la direction de l'axe d'installation, et apte à fournir un faisceau lumineux incident périphérique auxiliaire, distinct du faisceau principal fourni par la source lumineuse principale **34,** le faisceau auxiliaire comprenant des rayons radiaux contenus dans un plan radial contenant l'axe d'installation **A'1**, lesdits rayons radiaux étant dirigés vers l'axe d'installation **A'1,** et le faisceau auxiliaire comprenant, dans un même plan radial, des rayons radiaux non parallèles.

De préférence, on utilisera les deux sources lumineuses **34, 72** alternativement plutôt que simultanément.

Une telle source lumineuse auxiliaire **72,** annulaire et axée sur l'axe d'installation **A'1,** est illustrée sur la **figure 8****.** Elle est agencée en dessous de l'élément optique **30** et elle est portée par le plateau supérieur **50** de la platine primaire **44.** Cette source lumineuse auxiliaire **72** n'est pas mobile par rapport à l'élément optique **30** et est donc fixe par rapport à lui.

Ainsi, dans ce dispositif, la source lumineuse principale **34** est mobile entre au moins deux positions extrêmes selon la direction de l'axe d'installation **A'1** qui, peuvent être toutes les deux d'un même côté de la position axiale de la surface de réflexion de l'élément optique **30,** tandis que la source lumineuse auxiliaire **72** peut être agencée de l'autre côté de la position axiale de la surface de réflexion **31.**

Avantageusement, un dispositif tel que décrit ci-dessus permet la lecture optique de reliefs **12** portés par une portion d'intérêt **16** d'une paroi latérale externe **18** d'un récipient **14,** y compris dans des cas où la surface externe **18** de la portion d'intérêt **16** présente, dans des zone adjacentes aux reliefs **12,** une normale formant un angle allant jusqu'à 45°, mais de préférence inférieur à 45° par rapport à un plan normal à l'axe d'installation **A'1.**

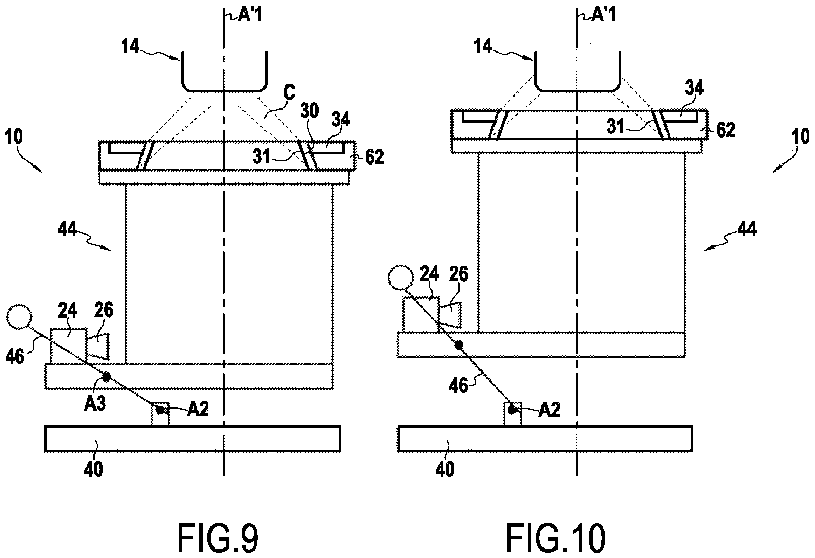

Les **figures 9** et **10** sont des vues schématiques du dispositif vu selon la direction latérale, qui illustrent comment, dans un dispositif selon l'invention, on peut déplacer l'élément optique **30,** en l'occurrence par déplacement de l'intégralité de la platine primaire **44** portant le capteur **24** et le système optique **28** incorporant l'élément optique **30,** ceci afin d'amener, comme illustré à la **Figure 10****,** le champ de vision du capteur **24** dans une position dans laquelle il peut voir la portion d'intérêt **16** de la paroi latérale **18** du récipient.

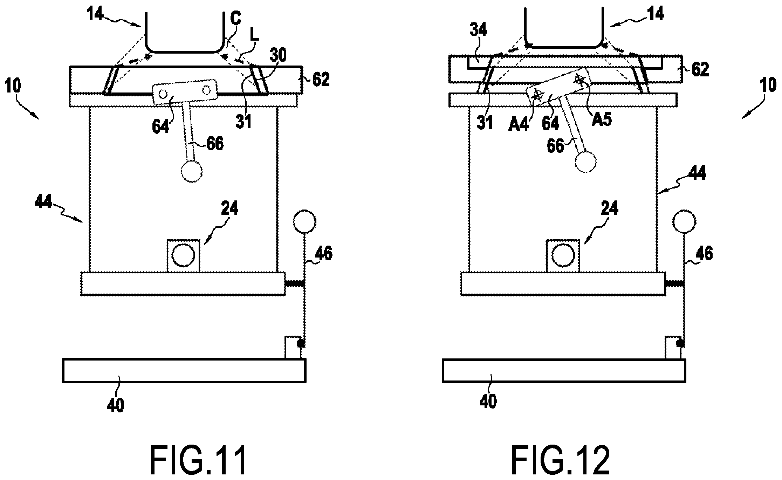

Les **figures 11** et **12** sont des vues schématiques du dispositif vu selon la direction frontale. La **figure 11** illustre la même position du dispositif **10** que la **figure 10****,** mais avec un autre angle de vue. La **figure 12** illustre le déplacement de la platine secondaire **62** qui permet de modifier la direction d'incidence du faisceau lumineux périphérique **L** sur un point donné de la portion intérêt **16,** sans déplacer le champ de vision. On remarque bien que lors du déplacement de la source lumineuse **34,** ce n'est pas la direction d'émission du faisceau lumineux périphérique par la source lumineuse principale **34** qui est modifiée, puisque celle-ci est déplacée par translation. Au contraire, il s'agit bien d'une modification de l'angle d'incidence des rayons provenant de la source, vu depuis un point considéré de la portion d'intérêt de la paroi latérale **18** du récipient, résultant du déplacement de la source.

Dans une application préférée de l'invention, le dispositif et le procédé sont mis en oeuvre pour la lecture, sur une bouteille en verre transparent, de reliefs, par exemple des perles, agencés sur le jable de la bouteille et formant un code correspondant à un numéro de moule utilisé pour la fabrication de ladite bouteille.

L'invention n'est pas limitée aux exemples décrits et représentés car diverses modifications peuvent y être apportées sans sortir de son cadre délimité par les revendications.

## Revendications

1. Procédé de lecture optique de reliefs formant un code d'identification, les reliefs **(12)** étant portés par une paroi latérale externe **(16)** d'un récipient **(14)** ayant un axe central théorique (**A1**), comportant les étapes consistant:
- à éclairer une portion d'intérêt **(16)** de la paroi latérale externe **(18)** du récipient **(14),** s'étendant autour de l'axe central théorique (**A1**), à l'aide d'une source lumineuse fournissant un faisceau lumineux incident périphérique comprenant des rayons lumineux radiaux contenus dans un plan radial contenant l'axe central théorique (**A1**), lesdits rayons radiaux étant dirigés vers l'axe central théorique (**A1**), et le faisceau comportant, dans un même plan radial, des rayons radiaux non parallèles,
- à former, par l'intermédiaire d'au moins un élément optique **(30, 31),** une image plane de la portion d'intérêt de la paroi du récipient, dans le champ de vision d'un capteur photoélectrique bidimensionnel **(24),**
- à assurer le traitement de l'image reçue par le capteur **(24),** afin de détecter les reliefs **(12),**
le procédé étant du type dans lequel le faisceau lumineux incident est au moins en partie réfléchi par réflexion spéculaire sur la portion d'intérêt **(16)** de la paroi latérale externe **(18)** et sur les reliefs **(12)** ;
**caractérisé en ce qu'**il comporte en outre l'étape consistant à déplacer, par translation selon la direction de l'axe central théorique (**A1**), la source lumineuse fournissant le faisceau lumineux incident périphérique par rapport à l'élément optique **(30, 31),** pour modifier le contraste de l'image reçue par le capteur **(24)** entre des zones de l'image correspondant aux reliefs **(12)** et des zones adjacentes de l'image correspondant à des zones de la portion d'intérêt **(16)** de la paroi **(18)** du récipient **(14)** adjacentes aux reliefs **(12).**

2. Procédé selon la revendication 1, **caractérisé en ce qu'**il comporte une étape d'optimisation du déplacement de la source **(34)** consistant à rechercher au moins une position de la source selon la direction de l'axe central théorique (**A1**) par rapport à l'élément optique **(30)** pour laquelle un niveau de contraste entre les zones de l'image correspondant aux reliefs **(12)** et des zones adjacentes de l'image correspondant à des zones de la portion d'intérêt **(16)** de la paroi **(18)** du récipient **(14)** adjacentes aux reliefs, est supérieur à un niveau prédéterminé.

3. Procédé selon l'une des revendications 1 ou 2, **caractérisé en ce qu'**il comporte une étape de déplacement de l'élément optique **(30)** selon la direction de l'axe d'installation pour amener la portion d'intérêt (16) de la paroi **(18)** du récipient **(14)** dans le champ de vision du capteur **(24),** et **en ce que** l'étape consistant à déplacer la source lumineuse principale **(34)** par rapport à l'élément optique **(30)** est mise en oeuvre après l'étape de déplacement de l'élément optique **(30).**

4. Procédé selon l'une quelconque des revendications précédentes, **caractérisé en ce que**, dans un plan radial contenant l'axe central théorique (**A1**), la source lumineuse **(34)** est vue d'un point de la portion d'intérêt **(16)** de la paroi latérale **(18)** du récipient **(14)** selon un angle de vision inférieur à 15 degrés, de préférence inférieur à 5 degrés.

5. Dispositif **(10)** de lecture optique de reliefs **(12)** portés par une portion d'intérêt (16) d'une paroi latérale externe **(18)** d'un récipient **(14),** le dispositif présentant une zone d'installation d'un récipient ayant un axe d'installation, et comprenant ;
- un capteur photoélectrique bidimensionnel **(24);**
- un système optique **(28)** interposé entre la zone d'installation du récipient et le capteur **(24)** pour former sur le capteur **(24)** une image de la portion d'intérêt (16) de paroi latérale externe **(18)** d'un récipient **(14)** placé dans la zone d'installation, le système optique **(28)** comportant au moins un élément optique **(30)** ayant une surface de réflexion de révolution **(31)** autour de l'axe d'installation (**A'1**) et présentant un diamètre minimal supérieur à un diamètre maximal de la portion d'intérêt **(16)** de la paroi latérale externe **(18)** d'un récipient susceptible d'être reçu dans la zone d'installation;
- un axe optique défini par le système optique **(28)** qui se prolonge dans la zone d'installation pour définir l'axe d'installation (**A'1**)
- un système d'éclairage comportant au moins une source lumineuse principale **(34),** périphérique et axée sur l'axe d'installation **(A'1),** et apte à fournir, dans la zone d'installation, un faisceau lumineux incident périphérique comprenant des rayons radiaux contenus dans un plan radial contenant l'axe d'installation **(A'1),** lesdits rayons radiaux étant dirigés vers l'axe d'installation (**A'1**), et le faisceau comprenant, dans un même plan radial, des rayons radiaux non parallèles ;
et du type dans lequel le système d'éclairage **(34),** le capteur **(24)** et le système optique **(28)** sont agencés en dessous de la zone d'installation, **caractérisé en ce que** la source lumineuse principale **(34)** fournissant le faisceau lumineux incident périphérique est mobile en translation selon la direction de l'axe d'installation **(A'1),** par rapport à l'élément optique **(30).**

6. Dispositif selon la revendication 5, **caractérisé en ce que** la source lumineuse principale **(34)** est mobile entre une multitude de positions bloquées distinctes selon la direction de l'axe d'installation **(A'1),** les positions bloquées étant comprises entre deux positions extrêmes, les positions bloquées étant discrètes prédéfinies ou une position quelconque par rapport à l'élément optique **(30).**

7. Dispositif selon l'une quelconque des revendications 5 ou 6, **caractérisé en ce que** l'élément optique **(30)** est mobile par rapport au capteur photoélectrique **(24),** selon la direction de l'axe d'installation **(A'1),** pour amener la portion d'intérêt **(16)** de la paroi du récipient dans le champ de vision du capteur photoélectrique au travers du système optique **(28).**

8. Dispositif selon la revendication 7, **caractérisé en ce qu'**il comporte des moyens de déplacement **(46)** de l'élément optique **(30)** par rapport à une embase **(40)** du dispositif, et **en ce que** les moyens de déplacement de la source lumineuse principale **(34)** par rapport à l'élément optique **(30)** opèrent indépendamment des moyens de déplacement **(46)** de l'élément optique **(30)** par rapport à l'embase **(40).**

9. Dispositif selon la revendication 8, **caractérisé en ce que** les moyens de déplacement **(46)** de l'élément optique **(30)** provoquent le déplacement simultané de la source lumineuse principale **(34)** avec l'élément optique **(30)** par rapport à l'embase **(40).**

10. Dispositif selon l'une quelconque des revendications 5 à 9, **caractérisé en ce que** la source lumineuse principale **(34)** est mobile entre au moins deux positions extrêmes selon la direction de l'axe d'installation **(A'1)** qui sont chacune de part et d'autre de la position axiale de la surface de réflexion **(31)** de l'élément optique **(30).**

11. Dispositif selon l'une quelconque des revendications 5 à 10, **caractérisé en ce que** le système d'éclairage comporte une source lumineuse auxiliaire **(72),** annulaire et axée sur l'axe d'installation **(A'1),** apte à fournir un faisceaux lumineux incident périphérique auxiliaire, distinct du faisceau principal fourni par la source lumineuse principale **(34),** le faisceau auxiliaire comprenant des rayons radiaux contenus dans un plan radial contenant l'axe, lesdits rayons radiaux étant dirigés vers l'axe d'installation **(A'1),** et le faisceau auxiliaire comprenant, dans un même plan radial, des rayons radiaux non parallèles, **en ce que** les deux sources lumineuses principale **(34)** et auxiliaire **(72)** sont décalées selon la direction de l'axe d'installation **(A'1),** et **en ce que** la source auxiliaire **(72)** est en position fixe par rapport à l'élément optique **(30).**

12. Dispositif selon la revendication 11, **caractérisé en ce que** la source lumineuse principale **(34)** est mobile entre au moins deux positions extrêmes selon la direction de l'axe d'installation **(A'1)** qui sont toutes les deux d'un même côté de la position axiale de la surface de réflexion **(31),** et **en ce que** la source lumineuse auxiliaire **(72)** est agencée de l'autre côté de la position axiale de la surface de réflexion **(31).**

13. Dispositif selon l'une quelconque des revendications 5 à 12, **caractérisé en ce que** la surface de réflexion **(31)** est une surface de révolution autour de l'axe d'installation (**A'1**), tournée vers l'axe d'installation(**A'1**), et **en ce que** la surface de réflexion **(31)** est évasée selon la direction de l'axe d'installation **(A'1)** et présente un grand diamètre et un petit diamètre tous les deux supérieurs au diamètre maximal de la portion d'intérêt **(16)** de la paroi latérale du récipient, le grand diamètre étant agencé en dessous du petit diamètre.

14. Dispositif selon l'une quelconque des revendications 5 à 13, **caractérisé en ce que** le capteur **(24)** est agencé en dessous de la surface de réflexion **(31).**

15. Ligne d'inspection de récipients **(14)** présentant des reliefs **(12)** portés par une portion inférieure d'une paroi latérale externe **(18),** du type dans laquelle des récipients sont déplacés sur une ligne de convoyage par un convoyeur qui transporte les récipients **(14)** selon une direction de déplacement horizontale perpendiculaire à un axe central théorique (**A1**) des récipients **(14)** qui présentent ainsi leur portion inférieure d'une paroi latérale externe **(18)** vers le bas, **caractérisée en ce que** la ligne comporte un dispositif **(10)** selon l'une quelconque des revendications 5 à 14, qui est agencé sur la ligne avec son axe d'installation **(A'1)** en position verticale, de telle sorte que le faisceau lumineux incident est orienté vers le haut, vers la zone d'installation qui se situe entre le dispositif et un organe de transport du convoyeur.

## Patentansprüche

1. Verfahren zum optischen Abtasten von Reliefs, die einen identifikationscode bilden, wobei die Reliefs (12) von einer äußeren Seitenwand (16) eines Behälters (14), der eine theoretische Mittelachse (A1) aufweist, getragen sind, umfassend die Schritte, die darin bestehen:
einen Abschnitt von Interesse (16) der äußeren Seitenwand (18) des Behälters (14), der sich um die theoretische Mittelachse (A1) erstreckt, mit Hilfe von einer Lichtquelle zu beleuchten, die einen peripheren, einfallenden Lichtkegel abgibt, der radiale Lichtstrahlen aufweist, die in einer radialen Ebene enthalten sind, die die theoretische Mittelachse (A1) enthält, wobei die radialen Strahlen auf die theoretische Mittelachse (A1) gerichtet sind und der Kegel in einer gleichen radialen Ebene nicht parallele, radiale Strahlen aufweist,
- durch mindestens ein optisches Element (30, 31) ein ebenes Bild des Abschnitts von Interesse der Wand des Behälters in dem Sichtfeld eines zweidimensionalen photoelektrischen Sensors (24) zu bilden,
- die Bearbeitung des Bildes zu gewährleisten, das von dem Sensor (24) empfangen wird, um die Reliefs (12) zu erfassen,
wobei das Verfahren von dem Typ ist, wobei der einfallende Lichtkegel mindestens teilweise durch Spiegelreflexion auf dem Abschnitt von Interesse (16) der äußeren Seitenwand (18) und auf den Reliefs (12) reflektiert wird,
**dadurch gekennzeichnet, dass** es ferner den Schritt aufweist, der darin besteht, durch Translation gemäß der Richtung der theoretischen Mittelachse (A1) die Lichtquelle, die den peripheren, einfallenden Lichtkegel abgibt, in Bezug auf das optische Element (30, 31) zu verschieben, um den Kontrast des Bildes, das von dem Sensor (24) empfangen wird, zwischen Bereichen des Bildes, die den Reliefs (12) entsprechen, und angrenzenden Bereichen des Bildes, die Bereichen des Abschnitts von Interesse (16) der äußeren Seitenwand (18) des Behälters (14) entsprechen, die an die Reliefs (12) angrenzend sind, zu ändern.

2. Verfahren nach Anspruch 1, **dadurch gekennzeichnet, dass** es einen Schritt des Optimierens des Verschiebens der Quelle (34) aufweist, der darin besteht, mindestens eine Position der Quelle gemäß der Richtung der theoretischen Mittelachse (A1) in Bezug auf das optische Element (30) zu suchen, für die ein Kontrastniveau zwischen den Bereichen des Bildes, die den Reliefs (12) entsprechen, und benachbarten Bereichen des Bildes, die Bereichen des Abschnitts von Interesse (16) der Seitenwand (18) des Behälters (14) entsprechen, die an die Reliefs angrenzend sind, höher als ein vorbestimmtes Niveau sind.

3. Verfahren nach Anspruch 1 oder 2, **dadurch gekennzeichnet, dass** es einen Schritt des Verschiebens des optischen Elements (30) gemäß der Richtung der Installationsachse aufweist, um den Abschnitt von Interesse (16) der Seitenwand (18) des Behälters (14) in das Sichtfeld des Sensors (24) zu bringen, und dadurch, dass der Schritt, der darin besteht, die Hauptlichtquelle (34) in Bezug auf das optische Element (30) zu verschieben, nach dem Schritt des Verschiebens des optischen Elements (30) durchgeführt wird.

4. Verfahren nach einem der vorhergehenden Ansprüche, **dadurch gekennzeichnet, dass** die Lichtquelle (34) in einer radialen Ebene, die die theoretische Mittelachse (A1) enthält, von einem Punkt des Abschnitts von Interesse (16) der äußeren Seitenwand (18) des Behälters (14) in einem Betrachtungswinkel gesehen wird, der kleiner als 15 Grad, vorzugsweise kleiner als 5 Grad ist.

5. Vorrichtung (10) zum optischen Abtasten von Reliefs (12), die von einem Abschnitt von Interesse (16) einer äußeren Seitenwand (18) eines Behälters (14) getragen sind, wobei die Vorrichtung einen Installationsbereich eines Behälters aufweist, der eine Installationsachse aufweist, und umfassend:
- einen zweidimensionalen photoelektrischen Sensor (24),
- ein optisches System (28), das zwischen dem Installationsbereich des Behälters und dem Sensor (24) angeordnet ist, um auf dem Sensor (24) ein Bild des Abschnitts von Interesse (16) der äußeren Seitenwand (18) eines Behälters (14) zu bilden, der in dem Installationsbereich angeordnet ist, wobei das optische System (28) mindestens ein optische Element (30) aufweist, das eine rotierende Reflexionsfläche (31) um die Installationsachse (A'1) aufweist und einen Mindestdurchmesser aufweist, der größer als der Maximaldurchmesser des Abschnitts von Interesse (16) der äußeren Seitenwand (18) eines Behälters ist, der in dem Installationsbereich aufgenommen werden kann,
- eine optische Achse, die von dem optischen System (28) definiert ist, die sich in dem Installationsbereich erstreckt, um die Installationsachse (A'1) zu bilden,
- ein Beleuchtungssystem, umfassend mindestens eine Hauptlichtquelle (34), die peripher ist und auf die Installationsachse (A'1) ausgerichtet ist, und geeignet ist, in dem Installationsbereich einen peripheren, einfallenden Lichtkegel abzugeben, der radiale Lichtstrahlen aufweist, die in einer radialen Ebene enthalten sind, die die Installationsachse (A'1) enthält, wobei die radialen Strahlen auf die Installationsachse (A'1) gerichtet sind und der Kegel in einer gleichen radialen Ebene nicht parallele, radiale Strahlen aufweist,
und vom Typ, wobei das Beleuchtungssystem (34), der Sensor (24) und das optische System (28) unterhalb des Installationsbereichs angeordnet sind, **dadurch gekennzeichnet, dass** die Hauptlichtquelle (34), die den peripheren, einfallenden Lichtkegel abgibt, gemäß der Richtung der Installationsachse (A'1) in Bezug auf das optische Element (30) in Translation beweglich ist.

6. Vorrichtung nach Anspruch 5, **dadurch gekennzeichnet, dass** die Hauptlichtquelle (34) zwischen einer Vielzahl von verschiedenen blockierten Positionen gemäß der Richtung der Installationsachse (A'1) beweglich ist, wobei die blockierten Positionen zwischen zwei Endpositionen liegen, wobei die blockierten Positionen vorbestimmte diskrete Positionen oder eine beliebige Position relativ zu dem optischen Element (30) sind.

7. Vorrichtung nach einem der Ansprüche 5 oder 6, **dadurch gekennzeichnet, dass** das optische Element (30) in Bezug auf den photoelektrischen Sensor (24) gemäß der Richtung der Installationsachse (A'1) beweglich ist, um den Abschnitt von Interesse (16) der Wand des Behälters durch das optische System (28) in das Sichtfeld des photoelektrischen Sensors zu bringen.

8. Vorrichtung nach Anspruch 7, **dadurch gekennzeichnet, dass** es Mittel zum Verschieben (46) des optischen Elements (30) in Bezug auf einen Sockel (40) der Vorrichtung aufweist, und dadurch, dass die Mittel zum Verschieben der Hauptlichtquelle (34) in Bezug auf das optische Element (30) unabhängig von den Mitteln zum Verschieben (46) des optischen Elements (30) in Bezug auf den Sockel (40) arbeiten.

9. Vorrichtung nach Anspruch 8, **dadurch gekennzeichnet, dass** es Mittel zum Verschieben (46) des optischen Elements (30) das gleichzeitige Verschieben der Hauptlichtquelle (34) mit dem optischen Element (30) in Bezug auf den Sockel (40) bewirken.

10. Vorrichtung nach einem der Ansprüche 5 bis 9, **dadurch gekennzeichnet, dass** die Hauptlichtquelle (34) zwischen mindestens zwei Endpositionen gemäß der Richtung der Installationsachse (A'1) beweglich ist, die sich jeweils beiderseits der axialen Position der Reflexionsfläche (31) des optischen Elements (30) befinden.

11. Vorrichtung nach einem der Ansprüche 5 bis 10, **dadurch gekennzeichnet, dass** das Beleuchtungssystem eine Hilfslichtquelle (72) aufweist, die ringförmig ist und auf die Installationsachse (A'1) ausgerichtet ist, die geeignet ist, einen peripheren, einfallenden Hilfslichtkegel abzugeben, der von dem Hauptlichtkegel verschieden ist, der von der Hauptlichtquelle (34) abgegeben wird, wobei der Hilfskegel radiale Lichtstrahlen aufweist, die in einer radialen Ebene enthalten sind, die die Achse enthält, wobei die radialen Strahlen zur Installationsachse (A'1) gerichtet sind, und wobei der Hilfskegel in einer gleichen radialen Ebene nicht parallele, radiale Strahlen aufweist, und dadurch, dass die Hauptlichtquelle (34) und die Hilfslichtquelle (72) gemäß der Richtung der Installationsachse (A'1) versetzt sind, und dadurch, dass die Hilfslichtquelle (72) in fester Position in Bezug auf das optische Element (30) ist.

12. Vorrichtung nach Anspruch 11, **dadurch gekennzeichnet, dass** die Hauptlichtquelle (34) zwischen mindestens zwei Endpositionen gemäß der Richtung der Installationsachse (A'1) beweglich ist, die sich beide auf einer gleichen Seite der axialen Position der Reflexionsfläche (31) befinden, und dadurch, dass die Hilfslichtquelle (72) auf der anderen Seite der axialen Position der Reflexionsfläche (31) angeordnet ist.

13. Vorrichtung nach einem der Ansprüche 5 bis 12, **dadurch gekennzeichnet, dass** die Reflexionsfläche (31) eine Rotationsfläche um die Installationsachse (A'1) ist, die der Installationsachse (A'1) zugewandt ist, und dadurch, dass die Reflexionsfläche (31) gemäß der Richtung der Installationsachse (A'1) aufgeweitet ist und einen großen Durchmesser und einen kleinen Durchmesser aufweist, die beide größer als der Maximaldurchmesser des Abschnitts von Interesse (16) der Seitenwand des Behälters ist, wobei der große Durchmesser unterhalb des kleinen Durchmessers ausgebildet ist.

14. Vorrichtung nach einem der Ansprüche 5 bis 13, **dadurch gekennzeichnet, dass** der Sensor (24) unterhalb der Reflexionsfläche (31) angeordnet ist.

15. Strecke zum Überprüfen von Behältern (14), die Reliefs (12) aufweisen, die von einem unteren Abschnitt einer äußeren Seitenwand (18) getragen sind, des Typs, wobei Behälter auf einer Förderstrecke durch einen Förderer bewegt werden, der die Behälter (14) gemäß einer horizontalen Bewegungsrichtung, die senkrecht zu einer theoretischen Mittelachse (A1) der Behälter (14) ist, transportiert, die somit ihren unteren Abschnitt einer äußeren Seitenwand (18) nach unten aufweisen, **dadurch gekennzeichnet, dass** die Strecke eine Vorrichtung (10) gemäß einem der Ansprüche 5 bis 14 aufweist, die auf der Strecke mit ihrer Installationsachse (A'1) in vertikaler Position derart angeordnet ist, dass der einfallende Lichtstrahl nach oben zu dem Installationsbereich ausgerichtet ist, der sich zwischen der Vorrichtung und einem Transportorgan des Förderers befindet.

## Claims

1. A method for optically reading reliefs forming an identification code, the reliefs (12) being borne by an external side wall (16) of a container (14) having a theoretical central axis (A1), comprising the steps consisting of:
- illuminating a section of interest (16) of the external side wall (18) of the container (14) extending about the theoretical central axis (A1) by means of a light source providing a light ray incident peripheral comprising radial light rays contained in a radial plane containing the theoretical central axis (A1), said light rays being directed towards the theoretical central axis (A1), and the ray comprising non-parallel light rays in the same radial plane,
- forming, by means of at least one optical element (30, 31), a plane image of the section of interest of the wall of the container, in the field of vision of a bidimensional photoelectric sensor (24),
- ensuring the processing of the image received by the sensor (24) to detect the reliefs (12),
the method being of the type in which the light incident ray is reflected at least in part by specular reflection over the section of interest (16) of the external side wall (18) and on the reliefs (12);
**characterized in that** it also comprises the step consisting of displacing, by translation according to the direction of the theoretical central axis (A1), the light source providing the peripheral incident light ray relative to the optical element (30, 31), so as to modify the contrast of the image received by the sensor (24) between zones of the image corresponding to the reliefs (12) and adjacent zones of the image corresponding to zones of the section of interest (16) of the wall (18) of the container (14) adjacent to the reliefs (12).

2. The method according to claim 1, **characterized in that** it comprises an optimization step of the displacement of the source (34) consisting of searching for at least one position of the source according to the direction of the theoretical central axis (A1) relative to the optical element (30) for which a level of contrast between the zones of the image corresponding to the reliefs (12) and adjacent zones of the image corresponding to zones of the section of interest (16) of the wall (18) of the container (14) adjacent to the reliefs, is greater than a predetermined level.

3. The method according to any one of claims 1 or 2, **characterized in that** it comprises a displacement step of the optical element (30) according to the direction of the installation axis to bring the section of interest (16) of the wall (18) of the container (14) into the field of vision of the sensor (24), and **in that** the step consisting of displacing the main light source (34) relative to the optical element (30) is conducted after the displacement step of the optical element (30).

4. The method according to any one of the preceding claims, **characterized in that**, in a radial plane containing the theoretical central axis (A1), the light source (34) is seen from a point of the section of interest (16) of the side wall (18) of the container (14) according to an angle of vision of less than 15 degrees, preferably less than 5 degrees.

5. The device (10) for optically reading reliefs (12) borne by a section of interest (16) of an external side wall (18) of a container (14), the device presenting an installation zone of a container having an installation axis, and comprising;
- a bidimensional photoelectric sensor (24);
- an optical system (28) interposed between the installation zone of the container and the sensor (24) to form on the sensor (24) an image of the section of interest (16) of an external side wall (18) of a container (14) placed in the installation zone, the optical system (28) comprising at least one optical element (30) having a reflection surface of revolution (31) about the installation axis (A'1) and presenting a minimal diameter greater than a maximal diameter of the section of interest (16) of the external side wall (18) of a container likely to be received in the installation zone;
- an optical axis defined by the optical system (28) which extends into the installation zone to define the installation axis (A'1);
- a lighting system comprising at least one main light source (34), peripheral and centred on the installation axis (A'1), and, in the installation zone, capable of supplying a peripheral incident light ray comprising light rays contained in a radial plane containing the installation axis (A'1), said light rays being directed towards the installation axis (A'1), and in a same radial plane the ray comprising non-parallel light rays;
and of the type in which the lighting system (34), the sensor (24) and the optical system (28) are arranged below the installation zone, **characterized in that** the main light source (34) providing the peripheral incident light ray is mobile in translation according to the direction of the installation axis (A'1), relative to the optical element (30).

6. The device according to claim 5, **characterized in that** the main light source (34) is mobile between a multitude of separate blocked positions according to the direction of the installation axis (A'1), the blocked positions being discrete predefined relative to the optical element (30).

7. The device according to any one of claims 5 or 6, **characterized in that** the optical element (30) is mobile relative to the photoelectric sensor (24), according to the direction of the installation axis (A'1), to bring the section of interest (16) of the wall of the container into the field of vision of the photoelectric sensor via the optical system (28) .

8. The device according to claim 7, **characterized in that** it comprises displacement means (46) of the optical element (30) relative to a base (40) of the device, and **in that** the displacement means of the main light source (34) relative to the optical element (30) operate independently of the displacement means (46) of the optical element (30) relative to the base (40).

9. The device according to claim 8, **characterized in that** the displacement means (46) of the optical element (30) cause simultaneous displacement of the main light source (34) with the optical element (30) relative to the base (40).

10. The device according to any one of claims 5 to 9, **characterized in that** the main light source (34) is mobile between at least two end positions according to the direction of the installation axis (A'1) which are each on either side of the axial position of the reflection surface (31) of the optical element (30).

11. The device according to any one of claims 5 to 10, **characterized in that** the lighting system comprises an auxiliary light source (72), annular and centred on the installation axis (A'1), capable of supplying an auxiliary peripheral incident light ray, separate from the principal ray supplied by the main light source (34), the auxiliary ray comprising light rays contained in a radial plane containing the axis, said light rays being directed towards the installation axis (A'1), and the auxiliary ray comprising, in the same plane radial, non-parallel light rays, **in that** the two principal (34) and auxiliary (72) light sources are offset according to the direction of the installation axis (A'1), and **in that** the auxiliary source (72) is in a fixed position relative to the optical element (30).

12. The device according to claim 11, **characterized in that** the main light source (34) is mobile between at least two end positions according to the direction of the installation axis (A'1) which are both on the same side of the axial position of the reflection surface (31), and **in that** the auxiliary light source (72) is arranged on the other side of the axial position of the reflection surface (31).

13. The device according to any one of claims 5 to 12, **characterized in that** the reflection surface (31) is a surface of revolution about the installation axis (A'1), turned towards the installation axis (A'1), and **in that** the reflection surface (31) is flared according to the direction of the installation axis (A'1) and has a large diameter and a small diameter both greater than the maximal diameter of the section of interest (16) of the side wall of the container, the large diameter being arranged below the small diameter.

14. The device according to any one of claims 5 to 13, **characterized in that** the sensor (24) is arranged below the reflection surface (31).

15. An inspection line of containers (14) presenting reliefs (12) borne by a lower section of an external side wall (18), of the type in which containers are displaced on a conveyor line by a conveyor which transports the containers (14) according to a horizontal direction of displacement perpendicular to a theoretical central axis (A1) of the containers (14) which accordingly present their lower section of an external side wall (18) downwards, **characterized in that** the line comprises a device (10) according to any one of claims 5 to 14, which is arranged on the line with its installation axis (A'1) in vertical position, such that the incident light ray is oriented upwards, towards the installation zone which is located between the device and a transport member of the conveyor.
